# FASCICULE DE BREVET EUROPEEN

(11) **EP 3 079 884 B1**
(45) Date de publication et mention de la délivrance du brevet: **21.08.2019**
(21) Numéro de dépôt: 14825417.0
(22) Date de dépôt: 09.12.2014
(51) Int. Cl.: B29C 64/112, B29C 64/386, B29D 11/00, B33Y 10/00, B33Y 80/00

(54) **PROCEDE ET SYSTEME DE FABRICATION D'UNE LENTILLE OPHTALMIQUE**
VERFAHREN UND SYSTEM ZUR HERSTELLUNG EINER OPHTHALMISCHEN LINSE
METHOD AND SYSTEM FOR PRODUCING AN OPHTHALMIC LENS

(30) Priorité: 11.12.2013 FR 1362435
(43) Date de publication de la demande: 19.10.2016
(73) Titulaire: Essilor International, 94220 Charenton-le-Pont (FR)
(72) Inventeur: GOURRAUD, Alexandre, F-94220 Charenton le Pont (FR)
(74) Mandataire: Santarelli
(86) Numéro de dépôt international: PCT/FR2014/053232
(87) Numéro de publication internationale: WO 2015/086981

(56) Documents cités:
- EP-A1- 1 442 870
- EP-A2- 2 447 046
- WO-A1-2014/195654
- DE-A1-102009 004 377
- GB-A- 2 489 855
- US-A1- 2009 250 828
- US-A1- 2012 251 378

## Description

### DOMAINE DE L'INVENTION

L'invention concerne le domaine de la fabrication des lentilles ophtalmiques présentant au moins une fonction optique, par exemple des lentilles ophtalmiques progressives.

L'invention concerne plus particulièrement un procédé de fabrication de telles lentilles ophtalmiques.

L'invention concerne également un système de fabrication configuré pour fabriquer une telle lentille ophtalmique.

### ARRIERE-PLAN TECHNOLOGIQUE

On sait que les lentilles ophtalmiques sont soumises à différentes étapes de fabrication afin de leur apporter les propriétés ophtalmiques prescrites (aussi appelées fonction optique).

On connaît des procédés de fabrication de lentilles ophtalmiques qui comportent une étape de fourniture d'un palet brut ou semi-fini, c'est-à-dire un palet n'ayant aucune ou ayant une seule face dite finie (autrement dit une face qui définit une surface optique simple ou complexe).

Ces procédés comportent ensuite une ou plusieurs étapes d'usinage d'au moins une face du palet dite brute, pour obtenir une face dite finie, définissant la surface optique recherchée pour fournir les propriétés ophtalmiques (complexes ou non) prescrites au porteur de la lentille ophtalmique.

On entend par une ou plusieurs étapes d'usinage les étapes dites d'ébauche, de finition et de polissage (usinage par surfaçage).

La fonction optique d'une lentille ophtalmique est apportée principalement par deux dioptres correspondant aux faces avant et arrière de la lentille ophtalmique. La topographie de la surface à réaliser dépend de la répartition de la fonction appliquée entre les faces avant et arrière de la lentille.

L'étape d'ébauche permet, partant d'un palet brut ou semi-fini, de lui donner l'épaisseur et les rayons de courbure de la surface sur la ou les faces dites non finies du palet, tandis que l'étape de finition (appelée aussi doucissage) consiste à affiner le grain voire la précision des rayons de courbure des faces obtenues précédemment et permet de préparer (doucir) la ou les surfaces courbes générées pour l'étape de polissage. Cette étape de polissage est une étape de surfaçage de la ou des surfaces courbes doucies ou ébauchées, et permet de rendre la lentille ophtalmique transparente. Les étapes d'ébauche et de finition sont des étapes qui imposent l'épaisseur de la lentille finale et les rayons de courbures de la surface traitée indépendamment de l'épaisseur de l'objet initiale et de ses rayons de courbures initiaux.

On notera qu'une technologie de fabrication de surfaces optiques complexes, appelée "free form surfacing" ou "digital surfacing" en anglais, implique un usinage particulièrement précis, une telle surface combinant par exemple un tore et une progression. L'usinage d'une telle surface optique complexe est réalisé à l'aide d'au moins une machine d'usinage de très haute précision au moins pour l'étape d'ébauche, voire pour l'étape de finition et de polissage, et/ou d'un polissoir capable de polir la ou les surfaces issues des étapes précédentes, sans déformer la lentille ophtalmique.

Plus précisément, on entend ici par étape d'ébauche, l'étape consistant à usiner l'élément optique intermédiaire, au moyen par exemple d'une fraise ou d'un outil diamanté, pour lui donner l'épaisseur et les rayons de courbure de la lentille ophtalmique cible ou proche de la lentille ophtalmique cible ; et par étape de finition, l'étape consistant à affiner le grain et/ou affiner les rayons de courbure de la surface de l'élément optique intermédiaire, au moyen par exemple d'un outil diamanté ou d'un outil à surface abrasive, afin de le rendre apte à subir une étape de polissage. Les étapes d'ébauche et de finition sont donc des étapes qui imposent la forme et les courbures de la surface traitée indépendamment de la forme et des courbures de la surface initiale.

On entend également ici par étape de polissage, l'étape consistant à donner à l'élément optique intermédiaire, une transparence de la lentille ophtalmique cible en éliminant les traces sur la ou les surfaces issues de l'ébauche et/ou de la finition. Cette étape de polissage est réalisée notamment au moyen d'un polissoir souple et d'une solution abrasive à grains fins (plus fins que ceux pouvant être mis en oeuvre lors d'une étape de finition). On appelle généralement cette étape une étape de polissage souple. Durant cette étape de polissage souple, la courbure de la correction principale (sphérique ou torique ou pseudo-sphérique ou pseudo-torique, dite courbure de base, et/ou la courbure d'une addition qui peut être ajoutée dans une zone dite "de vision de près"), ne sont pas impactées notablement par l'étape de polissage souple.

On notera que cette étape de polissage souple est distincte d'une autre étape d'usinage possible généralement appelée étape de polissage rigide, au cours de laquelle sont utilisés un polissoir rigide sphérique ou torique, ainsi qu'une solution abrasive à grains plus fin que celui des solutions abrasives utilisées durant l'étape de finition. Ce polissoir rigide agit sur la surface à traiter par rotation et abrasion de cette surface et lui confère une courbure sphérique ou torique complémentaire de celle du polissoir rigide. En d'autres termes, la forme de la courbure de la surface traitée par polissage rigide est donc l'image miroir de la forme de la courbure de la surface du polissoir rigide. Cette étape de polissage rigide est une variante de l'étape de finition décrite ci-dessus. Le document DE-A-102009004377 décrit une procédé selon le préambule de la revendication 1.

### OBJET DE L'INVENTION

L'invention vise à fournir un procédé de fabrication d'une lentille ophtalmique présentant au moins une fonction optique, qui soit particulièrement simple, commode et économique à mettre en oeuvre, et qui soit capable également de fournir de façon rapide et flexible des lentilles présentant une géométrie et des caractéristiques matériaux très diverses, répondant à une logique de personnalisation de masse.

L'invention a ainsi pour objet, sous un premier aspect, un procédé de fabrication d'une lentille ophtalmique présentant au moins une fonction optique, caractérisé en ce qu'il comporte :
- une étape de fabriquer de manière additive un élément optique intermédiaire par le dépôt d'une pluralité d'éléments de volume prédéterminés d'au moins un matériau ayant un indice de réfraction prédéterminé, ledit élément optique intermédiaire comprenant une lentille ophtalmique cible adjoint d'au moins une surépaisseur constituée d'une partie de ladite pluralité d'éléments de volume ; et
- une étape de fabriquer par polissage souple ladite lentille ophtalmique cible à partir dudit élément optique intermédiaire, par la soustraction au moins partielle de ladite au moins une surépaisseur de sorte à filtrer des aspérités formées sur au moins une face dudit élément optique intermédiaire durant ladite étape de fabrication additive ;
avec ladite étape de fabrication additive qui comporte une étape de déterminer une consigne de fabrication dudit élément optique intermédiaire, dans laquelle ladite surépaisseur est déterminée en fonction de paramètres prédéterminés que présente ladite étape de polissage souple, à savoir une caractéristique géométrique représentative d'une fréquence spatiale de coupure et une caractéristique géométrique représentative d'une capacité d'enlèvement de matière.

Le procédé de fabrication selon l'invention repose sur la combinaison de deux étapes de fabrication, à savoir l'étape de fabrication additive et l'étape de polissage souple, et sur la mise en oeuvre de l'étape de fabrication additive en fonction de cette étape de polissage souple, celle-ci entrant dans la détermination de la consigne de fabrication de l'étape de fabrication additive afin d'obtenir, après l'étape de polissage souple, une lentille ophtalmique à la prescription souhaitée et de qualité optique, ou ophtalmique.

En d'autres termes, la combinaison de ces deux étapes de fabrication forme un procédé dit hybride qui permet avantageusement d'obtenir une lentille ophtalmique présentant à la fois une fonction optique juste, parfaitement ajustée aux besoins du porteur, ainsi qu'une qualité d'état de surface compatible avec des applications ophtalmiques.

On notera que l'étape de fabrication additive permet de fournir un élément optique intermédiaire ayant une homogénéité de volume désirée et au moins une partie de la fonction optique adaptée au porteur, et l'étape de polissage souple, qui est postérieure à l'étape de fabrication additive, permet de finaliser la fonction optique désirée et de fournir, à partir de l'élément optique intermédiaire, une lentille ophtalmique qui présente une qualité d'état de surface pouvant être caractérisée par des paramètres de rugosité compatibles avec une application ophtalmique et qui présente des paramètres de transparence, de transmission lumineuse et de diffusion lumineuse compatible avec une application ophtalmique.

Par fonction optique juste, on entend une fonction optique présentant une marge d'erreur inférieure ou égale à +/- 0,12 dioptries en tout point de la lentille ophtalmique par rapport à la fonction optique correctrice adaptée au porteur permettant de fournir la correction optique prescrite au porteur.

Par qualité de surface compatible avec des applications ophtalmiques (ou qualité optique ou ophtalmique), on entend une qualité de surface permettant de garantir un taux de diffusion lumineuse de la lentille ophtalmique inférieur à environ 2%, préférentiellement inférieur à environ 1% et préférentiellement encore inférieur à environ 0,4%.

Les techniques de fabrication additive sont particulièrement pertinentes pour répondre à l'objectif de l'invention.

Par fabrication additive on entend selon la norme internationale ASTM 2792-12, des techniques de fabrication comprenant un procédé pour joindre des volumes unitaires de matière afin de fabriquer des objets à partir de données de modélisation 3D (typiquement un fichier de conception assistée par ordinateur, ci-après CAO), usuellement couche par couche, en opposition aux méthodologies de fabrication soustractive, telle que l'usinage traditionnel.

La fabrication additive correspond ici, par exemple, à un procédé d'impression tridimensionnelle mettant en oeuvre par exemple un jet de matière polymère (« inkjet printing » en terminologie anglo-saxonne), ou un procédé de stéréolithographie, voire de stéréolithographie par projection de masque, ou encore un procédé de frittage ou de fusion sélective par laser (« Selective Laser Melting », ci-après SLM, ou « Selective Laser Sintering », ci-après SLS en terminologie anglo-saxonne), ou encore un procédé d'extrusion par fil thermoplastique.

Les technologies de fabrication additives consistent à fabriquer des objets en juxtaposant et superposant des éléments de matière en accord avec un agencement prédéfini sous forme numérique dans un fichier de CAO. La matière constitutive des éléments de volume dans la fabrication additive peut être solide, liquide ou sous forme de gel, bien qu'il soit d'usage que la matière soit essentiellement solide à la fin du procédé de fabrication additive.

Ces éléments de volume élémentaires dénommés « voxels » peuvent être crées, juxtaposés et superposés selon une variété de principes techniques différents, par exemple, par dépose de gouttes de monomères photopolymérisables au moyen d'au moins une buse d'impression, par photopolymérisation sélective avec une source de rayons ultraviolets de la surface d'un bain de monomère (technique de stéréolithographie), ou par fusion de poudre polymère (SLM).

Les techniques de fabrication additive autorisent une très grande souplesse de définition géométrique des objets mais créent des défauts de fabrication sur la surface de l'objet fabriqué de manière additive, ici l'élément optique intermédiaire.

Ces défauts de fabrication forment des aspérités qui sont généralement générés en surface du volume désiré, du fait d'une fabrication au moyen de différents éléments de matière discrétisés, juxtaposés et/ou superposés ayant une dimension minimale limite non nulle. Ces aspérités sont formées lorsqu'au moins une partie d'un élément de volume de matériau dépasse de la surface du volume désiré ou lorsqu'il manque une portion de volume dans le volume désiré. Ces aspérités sont significatives d'une différence d'altitude entre au moins un élément de matière dit haut et au moins un élément de matière dit bas.

Par exemple, dans le cas d'une fabrication additive par couches superposées d'une pluralité d'éléments de matière formant des tranches, des marches sont ménagées à l'interface entre une couche inférieure et l'extrémité de la couche immédiatement supérieure lorsque que la couche inférieure s'étend plus loin que la couche immédiatement supérieure selon un axe donné. Ces marches sont définies par un point haut appelé pic qui dépasse le plus d'une altitude moyenne du volume formé par les deux couches et qui est formé par au moins l'extrémité de la couche supérieure, et par un point bas appelé creux formé à la jonction des couches inférieure et supérieure et qui représente un manque de matière par rapport à l'altitude moyenne du volume formé par les deux couches.

On entend au sens de l'invention qu'une aspérité (représentative d'un « défaut » de fabrication additive) est formée par une telle marche (ou par un défaut équivalent pour les technologies de fabrication additive n'utilisant pas strictement une fabrication par tranches) et donc par la matière se trouvant entre son pic (point haut) et son creux (point bas). On notera que l'aspérité présente bien entendu une épaisseur qui dépend de la stratégie de construction de l'élément optique intermédiaire.

A la place d'aspérité, on peut parler de saut de couches, ou encore de front de couches, représentatif du passage d'une couche dite n à une autre couche immédiatement inférieure dite n-1. On notera qu'un saut de couches illustre une variation d'altitude qui n'est pas forcément égale ou environ égale à la hauteur de la couche n, mais qui peut être inférieure à cette hauteur.

L'étape de fabrication de manière additive du procédé selon l'invention permet ainsi de fournir un élément optique intermédiaire comprenant la lentille ophtalmique, dite cible, et comprenant, sur tout ou partie de sa « future » surface externe, une surépaisseur, laquelle est définie en tenant compte d'une part, des capacités d'élimination (ou d'enlèvement) de matière du procédé de polissage pour réaliser l'étape de polissage souple et d'autre part, en tenant avantageusement compte d'une caractéristique géométrique représentative d'une fréquence spatiale de coupure du procédé de polissage.

En se basant sur la capacité d'enlèvement de matière et sur la fréquence spatiale de coupure caractéristiques de l'étape de polissage souple, l'étape de déterminer la consigne de fabrication de l'élément optique intermédiaire permet de prendre en considération l'épaisseur maximale envisageable pour la surépaisseur et la capacité de filtrage dont dispose un système de fabrication pourvu d'une machine de polissage souple. En d'autres termes, cette étape de détermination prend en compte à la fois l'épaisseur et les aspérités qui peuvent être au moins partiellement enlevées à l'élément optique intermédiaire, étant entendu que la capacité d'enlèvement de matière est ici caractéristique d'une épaisseur comprise par exemple dans l'intervalle de valeurs prédéterminé [1µm ; 150 µm].

La capacité d'enlèvement de matière du procédé de polissage est ici définie comme l'épaisseur de matière qui peut être abrasée sans qu'un outil de polissage (le polissoir) ne modifie de façon significative la courbure de la surface polie. La capacité d'enlèvement de matière dépend du matériau qui est poli, de la cinématique d'actionnement du polissoir vis-à-vis de l'élément optique intermédiaire poli et de la structure du polissoir.

Il est ici possible de parler de fréquence spatiale de coupure de polissage souple, mais aussi de longueur d'onde spatiale de coupure de polissage souple, car l'étape de polissage souple est mise en oeuvre à l'aide d'une machine de polissage pourvue d'un polissoir souple qui est configuré pour agir sur l'élément optique intermédiaire comme un filtre du type passe-bas, dans un espace de fréquences spatiales, dont la fréquence spatiale de coupure est déterminée par les propriétés de ce polissoir et les paramètres d'utilisation du polissoir, en d'autres termes sa cinématique d'actionnement.

On notera également qu'un tel polissoir combiné à une telle cinématique d'actionnement du polissoir forment un couple qui confère à la machine de polissage souple une pupille de polissage souple donnée. La cinématique d'actionnement est fonction du polissoir, de la surface polie, diamètre, caractère convexe ou concave de la surface, gamme de courbure, etc, et comprend des paramètres de procédé de polissage tels qu'au moins des vitesses de rotation, des pressions, des déplacements relatifs du polissoir et de l'élément à polir, etc. Les paramètres de procédé sont généralement configurés pour que la pupille de polissage soit sensiblement constante pour tout couple polissoir/cinématique utilisé par une même machine.

On entend par pupille de polissage un disque dont le diamètre correspond au diamètre maximal d'étalement d'un défaut ponctuel obtenu après la mise en oeuvre d'un procédé de polissage donné.

En d'autres termes, le diamètre d'étalement est le diamètre d'une zone dont la géométrie (courbure) après polissage est modifiée du fait de la présence initiale du défaut, par rapport à la géométrie (courbure) obtenue après le même polissage si le défaut ponctuel n'avait pas été présent.

Ici, la pupille de polissage est ainsi caractéristique de l'étalement d'une marche après polissage. Considérant que cette marche passe par le centre de rotation de la lentille lors de l'étape de polissage, l'étalement peut être mesuré au niveau du centre de rotation de la lentille, perpendiculairement à la marche.

Grâce au procédé de fabrication selon l'invention, les défauts de fabrication additive qui sont créés à la surface de l'élément optique intermédiaire et qui forment en partie la surépaisseur sont pris en compte dans la détermination de la consigne de fabrication additive de cet élément optique afin que les aspérités qui en résultent aient un positionnement optimisé qui permette que ces aspérités puissent être au moins partiellement supprimés par l'étape de polissage souple mise en oeuvre à l'aide de la pupille de polissage souple prédéterminée. En d'autres termes, l'étape de déterminer la consigne de fabrication additive de l'élément optique intermédiaire est configurée de sorte que les aspérités crées lors de la fabrication additive sont filtrées par la pupille de polissage lors de l'étape de polissage souple, dans le but d'obtenir une lentille ophtalmique ayant une fonction optique et une qualité d'état de surface requise.

Le procédé de fabrication selon l'invention est particulièrement simple, commode et économique, surtout dans un contexte où la diversité des fonctions optiques à réaliser est importante, en particulier du fait de la personnalisation de ces fonctions optiques, nécessitant des procédés de fabrication rapides et flexibles.

On notera également que l'on entend par fonction optique d'une lentille ou d'un élément optique intermédiaire, la réponse optique de cette lentille ou de cet élément, c'est-à-dire une fonction définissant toute modification de propagation et de transmission d'un faisceau optique à travers la lentille ou l'élément optique concerné, quelle que soit l'incidence du faisceau optique entrant et quelle que soit l'étendue géométrique d'un dioptre d'entrée illuminée par le faisceau optique incident.

Plus précisément, dans le domaine ophtalmique, la fonction optique peut être définie comme la répartition des caractéristiques de puissance porteur, d'astigmatisme, des déviations prismatiques et des aberrations d'ordre supérieur associées à la lentille ou à l'élément optique pour l'ensemble des directions du regard d'un porteur de cette lentille ou de cet élément. Cela suppose bien entendu la prédétermination du positionnement géométrique de la lentille ou de l'élément optique par rapport à l'oeil du porteur.

Selon des caractéristiques préférées, simples, commodes et économiques du procédé selon l'invention :
- ladite étape de déterminer ladite consigne de fabrication dudit élément optique intermédiaire est configurée pour que, au moins dans une zone déterminée de la face de l'élément optique intermédiaire, lesdites aspérités soient espacées les unes des autres d'une distance inférieure à une distance critique déterminée en fonction d'une valeur de ladite caractéristique géométrique représentative de la fréquence spatiale de coupure ; et/ou
- ladite caractéristique géométrique représentative de ladite fréquence spatiale de coupure correspond à un diamètre d'une pupille de polissage caractéristique de ladite étape de polissage souple et la distance critique est inférieure ou égale à la moitié préférentiellement au quart, ou encore au dixième, du diamètre de ladite pupille de polissage.

Le fait que chaque aspérités soit distante d'une autre aspérité d'une distance inférieure à la distance critique déterminée signifie que dans par exemple au moins trois directions partant d'une dite aspérité ou d'un point correspondant à un voxel positionné le long d'une aspérité ou encore d'un saut de couches, est présent une autre aspérité respective ou un autre saut de couches situé dans une zone respective de longueur égale à la distance critique déterminée.

En d'autres termes, on peut définir au moins trois segments de longueur chacune égale à la distance critique déterminée, partant d'une aspérité déterminée (ou d'un point correspondant à un voxel positionné le long de cette aspérité), dans chacun desquels se trouve une autre aspérité.

On notera que les au moins trois directions peuvent chacune être représentées par un demi-axe issu de l'aspérité déterminée, avec ces demi-axes qui sont décalés angulairement les uns par rapport aux autres avec un ou plusieurs décalages déterminés. Le décalage entre deux demi-axes ne devrait pas être caractéristique d'un angle trop obtus, et devrait être par exemple de préférence inférieure à environ 160°. Dit autrement, pour chaque demi-axe donné, il existe au moins un des autres demi-axes avec lequel il forme un angle inférieur à 160° dans le sens horaire en partant du demi-axe donné, et au moins un autre des autres demi-axes avec lequel il forme un angle inférieur à 160° dans le sens anti-horaire en partant du demi-axe donné.

Selon un mode de réalisation avantageux du procédé selon l'invention, où la fabrication additive est améliorée, ladite étape de déterminer ladite consigne de fabrication dudit élément optique intermédiaire est configurée pour que ledit élément optique intermédiaire soit incliné par rapport à un axe prédéterminé de construction additive, dit axe de stratification, selon lequel ladite pluralité d'éléments de volume prédéterminés d'au moins un matériau est déposée.

En d'autres termes, cela signifie que l'axe optique de la lentille ophtalmique finale est incliné par rapport à l'axe de stratification, par exemple avec un angle compris dans l'intervalle [20° ; 80°], ou encore dans l'intervalle [30° ; 70°].

Selon un autre mode de réalisation avantageux du procédé selon l'invention, où la fabrication additive est également améliorée, ladite étape de déterminer ladite consigne de fabrication dudit élément optique intermédiaire est configurée pour que ledit élément optique intermédiaire présente, en section, au niveau de sa face au moins une zone de fabrication d'un premier type qui est pourvue d'au moins deux premières portions et d'au moins une deuxième portion, formées en alternance, lesdites premières portions étant chacune pourvues d'au moins un élément de volume prédéterminé dudit matériau et ladite au moins une deuxième portion étant au moins partiellement dépourvue d'éléments de volume prédéterminés dudit matériau ; grâce à quoi des aspérités sont formées sur cette zone de fabrication du premier type.

Cela signifie qu'il existe par exemple au moins trois directions partant d'une dite première portion déterminée telle que selon chacune des directions est présente à la fois une deuxième portion et une autre première portion respective située dans une zone respective de longueur déterminée.

De préférence, la distance séparant les deux premières portions est de l'ordre de grandeur de la distance critique déterminée.

On notera que les au moins trois directions peuvent chacune être représentées par un demi-axe issu d'une aspérité de ladite première portion déterminée, avec ces demi-axes qui sont décalés angulairement les uns par rapport aux autres avec un ou plusieurs décalages déterminés. Le décalage entre deux demi-axes ne devrait pas être caractéristique d'un angle trop obtus, et est par exemple de préférence inférieure à environ 160°. Dit autrement, pour chaque demi-axe, il existe au moins un des autres demi-axes avec lequel il forme un angle inférieur à 160° dans le sens horaire et au moins un autre des autres demi-axes avec lequel il forme un angle inférieur à 160° dans le sens anti-horaire.

Selon d'autres caractéristiques préférées, simples, commodes et économiques du procédé selon l'invention :
- ladite au moins une zone de fabrication du premier type est pourvue d'éléments de volume prédéterminés d'un matériau ou de plusieurs matériaux distincts ;
- ladite au moins une zone de fabrication du premier type est définie par un cylindre glissant d'axe normal à la surface de la lentille ophtalmique cible, avec le volume total de la surépaisseur dans ce cylindre glissant qui est sensiblement constant ; et/ou
- ledit cylindre glissant présente un diamètre similaire ou inférieur à celui d'une pupille de polissage caractéristique de ladite étape de polissage souple.

Selon encore un autre mode de réalisation avantageux du procédé selon l'invention, où la fabrication additive est aussi améliorée, ladite étape de déterminer ladite consigne de fabrication dudit élément optique intermédiaire est configurée pour que ledit élément optique intermédiaire présente, en section, au niveau de sa face au moins une zone de fabrication d'un deuxième type, pourvue d'une pluralité d'éléments de volume prédéterminés d'un ou de plusieurs matériaux, avec lesdits éléments de volume prédéterminés qui présentent des propriétés d'abrasabilité distinctes.

Selon encore d'autres caractéristiques préférées, simples, commodes et économiques du procédé selon l'invention :
- ladite étape de fabrication additive est configurée pour former une pluralité de couches superposées de dits éléments de volume prédéterminés, et ledit élément optique intermédiaire ainsi fabriqué présente au moins deux dites zones de fabrication du premier type et/ou du deuxième type, qui sont formées sur des couches distinctes ; et/ou
- ladite étape de fabrication additive est configurée pour former une pluralité de couches superposées de dits éléments de volume prédéterminés, et ledit élément optique intermédiaire ainsi fabriqué présente au moins une dite zone de fabrication du premier type et/ou du deuxième type, qui est formée sur au moins deux couches immédiatement superposées.

L'invention a aussi pour objet, sous un deuxième aspect, un système de fabrication d'une lentille ophtalmique, comportant une machine de fabrication additive pour fabriquer un élément optique intermédiaire et une machine de polissage souple pour fabriquer une lentille ophtalmique à partir dudit élément optique intermédiaire, et au moins une unité de contrôle et de commande pourvue d'éléments systémiques configurés pour exécuter un programme d'ordinateur comportant des instructions configurées pour mettre en oeuvre chacune des étapes du procédé tel que décrit ci-dessus.

Selon des caractéristiques préférées, simples, commodes et économiques du système selon l'invention :
- ladite machine de polissage souple présente un polissoir et une cinématique d'actionnement dudit polissoir, qui est fonction dudit polissoir, lequel couple polissoir et cinématique d'actionnement confère à ladite machine de polissage souple une pupille de polissage souple donnée et une capacité d'enlèvement de matière donnée ;
- ladite machine de fabrication additive est une machine d'impression tridimensionnelle, ou de stéréolithographie, ou de stéréolithographie par projection de masque, voire de de frittage ou de fusion sélective par laser, ou d'extrusion par fil thermoplastique ; et/ou
- ladite machine de fabrication additive comporte un support de fabrication qui est amovible et configuré pour servir de support de fabrication pour la machine de polissage souple.

### BREVE DESCRIPTION DES DESSINS

On va maintenant poursuivre l'exposé de l'invention par la description d'un exemple de réalisation, donnée ci-après à titre illustratif et non limitatif, en référence aux dessins annexés sur lesquels :
- la figure 1 représente schématiquement un système de fabrication pourvu d'une machine de fabrication additive et d'une machine de polissage souple configurées pour réaliser une lentille ophtalmique ;
- la figure 2 représente schématiquement un élément optique intermédiaire fabriqué de manière additive avec la machine de fabrication additive du système illustré sur la figure 1 et une lentille ophtalmique fabriquée par polissage souple à partir de l'élément optique intermédiaire avec la machine de polissage souple du système illustré sur la figure 1 ;
- la figure 3 est un schéma-blocs illustrant différentes étapes de fonctionnement d'un procédé de fabrication d'une lentille ophtalmique ;
- la figure 4 est un schéma-bloc montrant l'étape de détermination d'une consigne de fabrication additive de l'élément optique intermédiaire ; et
- la figure 5 représente schématiquement et partiellement l'élément optique intermédiaire de la figure 2 dans la machine de polissage souple du système illustré sur la figure 1 ;
- la figure 6 représente schématiquement l'action d'un outil de la machine de polissage souple du système illustré sur la figure 1 sur l'élément optique intermédiaire de la figure 2 ;
- les figures 7 et 8 représentent schématiquement et partiellement l'élément optique intermédiaire de la figure 2 conformément à deux variantes de mise en oeuvre du procédé selon l'invention, relatives respectivement à des première et deuxième stratégies de fabrication additive améliorées ;
- les figures 9A et 9B, 10A et 10B et 11A à 11C illustrent respectivement trois variantes de réalisation de la deuxième stratégie de fabrication additive améliorée ; et
- la figure 12 représente schématiquement et partiellement l'élément optique intermédiaire de la figure 2 conformément à une autre variante de mise en oeuvre du procédé selon l'invention, relative à une troisième stratégie de fabrication additive améliorée.

### DESCRIPTION DETAILLEE D'UN EXEMPLE DE REALISATION

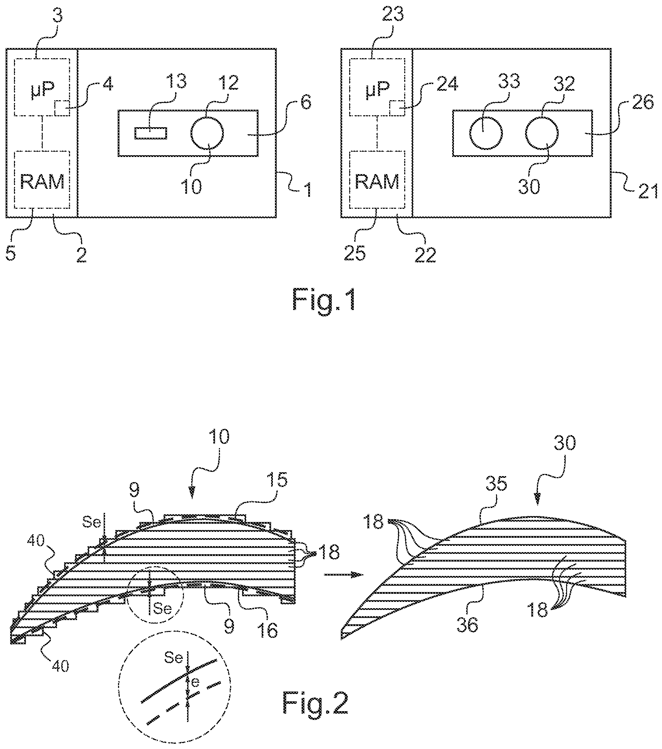

La figure 1 illustre un système de fabrication d'une lentille ophtalmique 30, comportant une machine de fabrication additive 1, ici une machine d'impression tridimensionnelle à commande numérique, et une machine de polissage souple 21, également à commande numérique.

La commande numérique désigne l'ensemble des matériels et logiciels ayant notamment pour fonction de donner des instructions de mouvement à tous les organes que comportent les machines de fabrication additive 1 et de polissage souple 21.

La machine de fabrication additive 1 est ici configurée pour déposer, par juxtaposition, une pluralité d'éléments de volume prédéterminés formant des couches superposées, autrement dit en couche par couche, d'au moins un matériau sur un support de fabrication 12 pour former un élément optique intermédiaire 10.

Cet élément optique intermédiaire 10 est configuré pour former une lentille ophtalmique 30.

Cette lentille ophtalmique 30 est par exemple progressive et possède en outre des composantes torique et prismatique.

Chaque élément de volume prédéterminé est défini par une composition prédéterminée, une position prédéterminée dans l'espace et des dimensions prédéterminées à un instant t.

Comme il s'agit ici de fabrication additive et en particulier d'impression tridimensionnelle, on parle également d'élément volumétrique, ou d'élément de volume, appelé aussi voxel (représentatif d'un pixel en trois dimensions).

Cet élément optique intermédiaire 10 est donc porté par le support de fabrication 12.

On notera que ce support de fabrication 12 est un support prédéterminé de la machine de fabrication additive 1 et donc que ses caractéristiques géométriques sont connues et regroupées dans un fichier qui est stocké ou chargé dans une première unité de contrôle et de commande 2 de la machine de fabrication additive 1.

Le support de fabrication 12 de la machine de fabrication additive 1 comporte un corps pourvu d'une surface de fabrication qui présente une géométrie globale indépendante, pour tout ou partie, de la géométrie d'au moins une surface de l'élément optique intermédiaire à réaliser par fabrication additive.

Le support de fabrication 12 peut être amovible et être configuré pour s'adapter à la machine de polissage souple 21 utilisée en complément de la machine de fabrication additive 1.

L'ensemble des matériels et logiciels de la machine de fabrication additive 1 est en outre configuré pour donner des instructions de mouvement, de manipulation et de contrôle de matériaux et de dispositifs de polymérisation que comporte cette machine 1.

La machine de fabrication additive 1 comporte une buse ou une rampe de buses 13 ainsi que la première unité de contrôle et de commande 2, laquelle est pourvue d'un système de traitement de données comportant un microprocesseur 3 muni d'une mémoire 4, notamment non volatile, lui permettant de charger et stocker un logiciel, autrement dit un programme d'ordinateur qui, lorsqu'il est exécuté dans le microprocesseur 3, permet la mise en oeuvre d'un procédé de fabrication additive. Cette mémoire non volatile 4 est par exemple de type ROM (« *Read-Only Memory* » en anglais).

La première unité 2 comporte en outre une mémoire 5, notamment volatile, permettant de mémoriser des données durant l'exécution du logiciel et la mise en oeuvre du procédé de fabrication additive.

Cette mémoire volatile 5 est par exemple de type RAM ou EEPROM (respectivement « *Random Access Memory* » et « *Electrically Erasable Programmable Read-Only Memory* » en anglais).

La machine de fabrication additive 1 comporte de plus une ouverture 6, ici vitrée, configurée pour accéder à l'élément optique intermédiaire 10 fabriqué de manière additive par cette machine 1 sur le support de fabrication 12 de cette dernière; cette ouverture est optionnelle dans la machine.

On notera que pour fabriquer de manière additive l'élément optique intermédiaire 10, on a besoin de connaître précisément certains paramètres de fabrication additive, tels que la vitesse d'avance de la ou des buses 13, l'énergie et la source d'énergie mises en oeuvre, ici une source émettant dans l'ultra-violet pour la machine d'impression tridimensionnelle mais il pourrait s'agir d'un laser dans le cas d'une machine de stéréolithographie ou encore d'une énergie de chauffe dans le cas d'un dépôt à fil tendu appelé aussi extrusion par fil thermoplastique.

On a aussi besoin de connaître précisément le ou les matériaux utilisés et leur état, ici sous forme de composition polymérisable, ou de fil, gouttes, ou poudre de polymère thermoplastique.

On a aussi besoin de connaître précisément la ou les fonctions optiques simples ou complexes prescrites à la lentille ophtalmique 30, fonction optique qui est caractérisée par une géométrie définie dans un fichier de fabrication caractéristique des propriétés optiques simples ou complexes de la lentille ophtalmique 30.

Selon une variante, on a aussi besoin de connaitre des paramètres de personnalisation du porteur et /ou des paramètres de la géométrie de la monture destinée à recevoir la lentille ophtalmique 30, pour ajuster la fonction optique de la lentille ophtalmique à ses conditions d'utilisation finales.

On notera qu'il est possible de définir une fonction optique simple comme étant la fonction optique obtenue à partir de surfaces sphériques ou toriques.

A contrario, il est possible de définir une fonction optique complexe comme étant la fonction optique obtenue à partir d'au moins une surface non simple, c'est-à-dire par exemple d'une surface asphérique, atorique, comportant une fonction associée à la monturisation, ou encore au débasage (« freecurve » en terminologie anglo-saxonne).

De plus, il est possible de définir une fonction optique additionnelle comme étant une fonction optique qui présente une variation de puissance, perçue par un porteur, continue ou non, selon la position sur le verre, et/ou selon le temps. Ce peut être par exemple une fonction optique progressive ou multifocale, telle que bifocale ou trifocale, ou à puissance commandée au cours du temps, comme par exemple ce peut être le cas pour une lentille fluidique ou une lentille comportant une fonction active ou une lentille informative.

La connaissance de la fonction optique, de l'indice optique du ou des matériaux utilisés pour former la lentille finale, ainsi que de certains paramètres de personnalisation et/ou de monture, permet de définir une enveloppe géométrique requise pour la lentille ophtalmique 30 (aussi appelée enveloppe externe tridimensionnelle). Cette enveloppe géométrique requise définit les caractéristiques géométriques de la lentille ophtalmique 30. Cette enveloppe externe tridimensionnelle englobe une enveloppe géométrique de la lentille ophtalmique et une ou plusieurs surépaisseurs Se adjointes sur tout ou partie d'au moins une face de la lentille ophtalmique 30.

On rappelle que par fonction optique d'une lentille ou d'un élément optique, on entend la réponse optique de cette lentille ou de cet élément, c'est-à-dire une fonction définissant toute modification de propagation et de transmission d'un faisceau optique à travers la lentille ou l'élément optique concerné, quelles que soient l'incidence du faisceau optique entrant et l'étendue géométrique d'un dioptre d'entrée illuminée par le faisceau optique incident.

Plus précisément, dans le domaine ophtalmique, la fonction optique est définie comme la répartition des caractéristiques de puissance porteur et d'astigmatisme, des déviations prismatiques et des aberrations d'ordre supérieur associées à la lentille ou à l'élément optique pour l'ensemble des directions du regard d'un porteur de cette lentille ou de cet élément. Cela suppose bien entendu la prédétermination du positionnement géométrique de la lentille ou de l'élément optique par rapport à l'oeil du porteur.

On notera également que la puissance porteur est une manière de calculer et d'ajuster la puissance de la lentille ophtalmique, qui se différencie de la puissance frontofocomètre. Le calcul en puissance porteur assure que la puissance perçue par le porteur (c'est-à-dire la puissance du faisceau de lumière qui rentre dans l'oeil), une fois la lentille positionnée dans la monture et portée par le porteur, corresponde à la puissance prescrite. En général, en tout point du verre, notamment au niveau des points de contrôle de vision de loin et de vision de près, pour un verre progressif, la puissance mesurée avec un frontofocomètre se différencie de la puissance porteur. Cependant, la puissance porteur au niveau du centre optique d'une lentille unifocale est généralement proche de la puissance observée avec un frontofocomètre positionné en ce point.

La machine de polissage souple 21 est ici configurée pour usiner par polissage, au moins tout ou partie de l'élément optique intermédiaire 10 fabriqué de manière additive, pour former la lentille ophtalmique cible 30. L'élément optique intermédiaire 10 est porté et maintenu dans une position de travail dans un support de fabrication 32 de la machine 21. Cette position de travail peut être prédéterminée ou plus généralement correspondre à une position permettant de centrer géométriquement l'élément optique intermédiaire par rapport aux trajectoires de l'outil de polissage de la machine 21.

On notera que ce support de fabrication 32 est un support prédéterminé de la machine 21 et donc que ses caractéristiques géométriques et d'emplacement dans la machine sont connues et regroupées dans un fichier qui est stocké ou chargé dans une deuxième unité de contrôle et de commande 22 de la machine de fabrication soustractive 21.

On notera que les supports de fabrication 12 et 32 peuvent ne former qu'un seul et même support et/ou que le support de fabrication 32 peut de façon avantageuse être réalisé lui-même par fabrication additive telle que définie au sens de l'invention.

La machine 21 est ainsi configurée pour polir de manière souple tout ou partie de la surface de l'élément optique intermédiaire 10, y compris dans le cas où l'élément optique intermédiaire présente une surface d'un verre progressif, possédant en outre optionnellement des composantes torique et prismatique.

La machine de polissage souple 21 comporte une broche portant un outil de polissage 33, par exemple un polissoir ayant un diamètre prédéterminé, afin de polir et lisser les aspérités présentes à la surface de l'élément optique intermédiaire issue de l'étape de fabrication additive. Elle comporte aussi la deuxième unité de contrôle et de commande 22 qui est similaire à la première unité 2 de la machine de fabrication additive 1.

Les trajectoires de l'outil de polissage de la machine 21 sont définies par une cinématique d'actionnement du polissoir, laquelle cinématique correspond en outre aux pressions imposées au polissoir et à l'élément optique intermédiaire poli lors de l'étape de polissage.

Le couple formé par le polissoir et la cinématique d'actionnement du polissoir permet de définir une pupille de polissage caractéristique de l'étape de polissage souple (voir ci-après).

Cette deuxième unité 22 est ainsi pourvue d'un système de traitement de données comportant un microprocesseur 23 muni d'une mémoire 24, notamment non volatile, lui permettant de charger et stocker un logiciel, autrement dit un programme d'ordinateur, qui, lorsqu'il est exécuté dans le microprocesseur 23, permet la mise en oeuvre d'un procédé de fabrication soustractive, et plus particulièrement ici une séquence d'au moins une étape d'usinage parmi une étape de de finition et une étape de polissage. Cette mémoire non volatile 24 est par exemple de type ROM (« Read-Only Memory » en anglais).

L'ensemble des matériels et logiciels de la machine de fabrication additive 21 est en outre configuré pour donner des instructions de mouvement et de manipulation de tous les organes que comporte cette machine et notamment de sa broche 33.

La deuxième unité 22 comporte en outre une mémoire 25, notamment volatile, permettant de mémoriser des données durant l'exécution du logiciel et la mise en oeuvre du procédé de polissage souple.

Cette mémoire volatile 25 est par exemple de type RAM ou EEPROM (respectivement « Random Access Memory » et « Electrically Erasable Programmable Read-Only Memory » en anglais).

La machine de polissage souple 21 comporte de plus une ouverture 26, optionnelle, ici vitrée, configurée pour accéder à la lentille ophtalmique 30 fabriquée par polissage souple par cette machine 21 sur le support de fabrication 32 de cette dernière.

On notera que pour fabriquer par polissage souple la lentille ophtalmique cible 30 à partir de l'élément optique intermédiaire 10, on a besoin de connaître précisément certains paramètres de polissage, tels que par exemple la vitesse de rotation de l'élément optique intermédiaire, la vitesse de balayage du polissoir, le nombre de balayages du polissoir, la pression qu'exerce le polissoir sur la surface de l'élément optique, la trajectoire et l'amplitude de balayage du polissoir, le diamètre du polissoir, la taille et la concentration des particules abrasives qui sont présentes dans le liquide utilisés durant le procédé de polissage (appelé "slurry" en langue anglaise).

Ces paramètres permettent à l'étape de polissage souple de présenter des capacités de lissage (ou filtrage) définies, qui sont par exemple caractérisées par sa fréquence spatiale de coupure et/ou sa longueur d'onde spatiale de coupure, ou par sa pupille de polissage.

La figure 2 montre, schématiquement, une lentille ophtalmique 30, obtenue à partir d'un élément optique intermédiaire 10 fabriqué de manière additive sur le support de fabrication.

Sur la gauche de la figure 2 est représenté l'élément optique intermédiaire 10, fabriqué de manière additive, tandis que sur la droite de cette figure est représentée la lentille ophtalmique cible 30 fabriquée par polissage souple à partir de cet élément optique intermédiaire 10.

L'élément optique intermédiaire 10 présente un corps pourvu d'une première face 15 qui est ici convexe ainsi qu'une deuxième face 16 qui est ici concave. Cette deuxième face 16 est celle qui se trouve ici en regard de la surface du support de fabrication sur laquelle l'élément optique intermédiaire 10 est fabriqué de manière additive.

En variante, une construction inverse consistant à avoir une deuxième face 16 convexe peut être réalisée, et/ou la première face 15 peut présenter un profil concave.

Cet élément optique intermédiaire 10 comporte une tranche périphérique raccordant la première face 15 à la deuxième face 16.

On observera que l'élément optique intermédiaire 10 a ici été fabriqué directement avec un contour adapté à une forme de monture prédéterminée dans laquelle la lentille ophtalmique cible 30 est configurée pour être montée.

En variante, l'élément optique intermédiaire peut présenter une tranche périphérique formant un contour légèrement différent de celui désiré pour la lentille ophtalmique, par exemple légèrement moins important ou légèrement plus important qu'un contour configuré pour être introduit dans la monture prédéterminée, ou comportant des extensions pour permettre une préhension ou pouvant avoir une autre fonction.

On notera que dans le cas où l'élément optique intermédiaire présente une tranche périphérique formant un contour plus important qu'un contour de la tranche de la lentille ophtalmique, le contour complémentaire peut aussi comprendre une partie de la surépaisseur réalisée lors de l'étape de fabrication additive, en particulier pour faciliter l'étape de polissage et diminuer l'apparition d'éventuels effets de bords.

Dans une autre variante, l'élément optique intermédiaire peut présenter au moins un moyen permettant de maintenir la lentille ophtalmique dans une monture prédéterminée, ce moyen étant réalisé lors de l'étape de fabrication additive. Ce moyen peut par exemple être formé par un ou plusieurs trous ménagés dans l'élément optique intermédiaire, traversant au moins une des faces, pour fixer des montures nécessitant des verres percés, et/ou une rainure pour recevoir un fil de type nylon pour une monture de type "nylor", et/ou un biseau afin de pouvoir se loger en complémentarité avec une monture de type fermée.

On notera que la possibilité de fabriquer une lentille ophtalmique déjà à la forme convenant pour être introduit dans une monture prédéterminée peut permettre de réduire les risques de désalignement des verres pouvant résulter d'une étape de détourage qui peut être faite en magasin ; et/ou cette possibilité peut en outre permettre de réduire les stocks de semi-finis généralement nécessaires.

L'élément optique intermédiaire 10 est ici formé par une pluralité d'éléments de volume prédéterminés qui sont juxtaposés et superposés pour former une pluralité de couches superposées d'un matériau 18. Ces éléments de volume prédéterminées peuvent avoir une géométrie différente et être différents en volume les uns par rapport aux autres, comme le permet de façon usuelle la mise en oeuvre d'un tel procédé de fabrication additive. Ces éléments de volume peuvent également être constitués du même matériau ou, en variante, peuvent être constitués d'au moins deux matériaux différents ayant par exemple des indices de réfraction distincts et/ou des propriétés d'abrasabilité distinctes.

On notera que l'utilisation d'au moins deux matériaux présentant des indices de réfraction différents peut par exemple permettre d'apporter des propriétés optiques et fonctionnelles optimisées à la lentille ophtalmique cible ; tandis que l'utilisation d'au moins deux matériaux présentant des propriétés d'abrasabilité différentes est particulièrement intéressante dans la détermination de la consigne de fabrication additive afin d'optimiser la géométrie de la surépaisseur et déposer le ou les matériau(x) le ou les plus adapté(s) en fonction de l'étape postérieure de polissage souple.

Cette pluralité de couches superposées forme le corps ensemble avec la première face 15 et la deuxième face 16 de cet élément optique intermédiaire 10.

On observera que les couches superposées du premier matériau 18 présentent ici des longueurs différentes de manière à former les première et deuxième faces 15 et 16 de cet élément optique intermédiaire 10.

On observera que certaines technologies de fabrication additive n'ont qu'une notion relative de "couches", une couche n'étant alors qu'un ensemble de voxels artificiellement déposés lors d'un même passage de buses ou d'un même masquage et ne formant pas forcément de tranches de matière. Cependant, l'enseignement de la présente invention se retranscrit aisément à ces technologies.

Ces couches présentent ici chacune une épaisseur sensiblement constante sur la longueur et elles présentent toutes sensiblement la même épaisseur. On observera que certaines technologies de fabrication additive peuvent prévoir des couches avec des épaisseurs variables le long de la couche. Cependant, l'enseignement de la présente invention se retranscrit aisément à ces technologies.

On notera que cette épaisseur sensiblement constante de la couche est ici obtenue grâce à la dépose contrôlée et commandée, par la buse ou la rampe de buses 13 de la machine de fabrication additive 1, d'une quantité déterminée d'éléments de volume prédéterminés pour chaque couche superposée du matériau 18.

Le matériau 18 est ici un polymère acrylique, et plus précisément un photopolymère, par exemple un photopolymère tel que le produit commercialisé par la société OBJET Ltd, sous la marque VeroClear™.

On notera que la fabrication additive de l'élément optique intermédiaire 10 peut nécessiter, en plus du dépôt de la pluralité de couches successives et superposées, une ou plusieurs étapes de photo-polymérisation.

Les étapes de photo-polymérisation peuvent être mises en oeuvre au dépôt de chaque élément de volume, de façon globale après le passage de la buse et/ou de la rampe de buse ou après le dépôt de chaque couche de d'éléments de volume.

On notera d'ailleurs, comme on le verra ci-après plus en détail, que la polymérisation de l'élément optique intermédiaire 10 peut ne pas être complètement terminée à la fin de l'étape de fabrication additive de cet élément optique intermédiaire 10.

Le corps de l'élément optique intermédiaire 10 comporte ici deux surépaisseurs 9 ménagées de part et d'autre du corps au niveau respectivement des première et deuxième faces 15 et 16.

La géométrie de l'élément optique intermédiaire 10 est ici conçue de façon à avoir une surépaisseur 9 d'épaisseur notée Se qui couvre au moins l'une des première et deuxième faces 15 et 16, par rapport à l'enveloppe géométrique de la lentille ophtalmique cible 30.

On notera que l'épaisseur Se de cette surépaisseur 9 est définie dans l'invention comme la distance entre la surface de l'enveloppe géométrique de la lentille ophtalmique cible 30 et une surface dite intérieure de l'élément optique intermédiaire 10, autrement dit une surface définie par les points de chaque couche de la surface de l'élément optique intermédiaire les plus proches localement de la surface de la lentille ophtalmique finale (cible). En particulier la surface intérieure correspond à une surface définie par les creux des aspérités tels que définis plus haut.

Ainsi, localement, l'épaisseur Se de la surépaisseur 9 est définie de façon à ne tenir compte ni des variations locales d'épaisseurs dues aux pics et creux des aspérités, ni aux variations d'altitudes liées à la jonction de voxels voisins, ni aux "sauts de marches" entre deux nappes ou couches superposées.

De plus, l'épaisseur Se de la surépaisseur 9 a une valeur sensiblement constante en tout point par rapport à l'enveloppe géométrique de la lentille ophtalmique, modulo l'amplitude des aspérités.

De préférence, sur l'ensemble de l'élément optique intermédiaire, l'épaisseur Se de la surépaisseur 9 est comprise dans l'intervalle [1µm ; 150µm]. La surépaisseur moyenne sur l'ensemble de la lentille peut être comprise dans l'intervalle [10µm ; 100µm] et de préférence dans l'intervalle [10µm, 50µm].

En particulier, l'épaisseur Se de la surépaisseur 9 est choisie pour être supérieure ou égale à deux fois une amplitude maximale des aspérités et inférieure à la capacité d'enlèvement de matière de l'étape de polissage souple. De préférence, l'épaisseur Se de la surépaisseur 9 est choisie pour être supérieure ou égale à trois fois une amplitude maximale des aspérités. L'amplitude d'une aspérité peut être mesurée en évaluant l'amplitude pic-creux selon un axe passant par la normale locale à la surface cible de la lentille ophtalmique.

On notera que pour simplifier le choix de la valeur de l'épaisseur Se, en d'autres termes pour ne pas avoir besoin de calculer l'amplitude de chaque aspérité, l'épaisseur Se de la surépaisseur 9 peut être choisie pour être supérieure ou égale à deux fois, préférentiellement trois fois, une hauteur d'un voxel. La hauteur de voxel utilisée comme référence peut être choisie comme étant la hauteur moyenne des voxels utilisés proches de la surface de l'élément optique intermédiaire, ou la hauteur maximale des voxels utilisés proches de la surface de cet élément optique intermédiaire. Ou encore, ce peut être la hauteur moyenne des voxels employée pour fabriquer l'élément optique intermédiaire par voie de fabrication additive. Alternativement ce peut être encore une autre dimension d'un voxel.

La capacité d'enlèvement de matière du procédé de polissage est définie comme l'épaisseur de matière qui peut être abrasée sans que l'outil de polissage ne modifie de façon significative la courbure de la surface polie. La capacité d'enlèvement de matière dépend du matériau qui est poli, de la cinématique d'actionnement du polissoir vis-à-vis de l'élément optique intermédiaire poli et de la structure du polissoir.

Cette valeur peut être identifiée par exemple en polissant avec différents temps de polissage un échantillonnage de lentilles ayant des surfaces représentatives de la gamme de surfaces à polir avec cette machine. Par exemple, on peut choisir une série de lentilles finies de base 2 à 6, comprenant des surfaces toriques et des surfaces sphériques, avec et sans additions, lorsqu'on évalue un polissoir plan. Ensuite l'écart à la courbure occasionné par le polissage peut être mesuré pour chaque lentille. Lorsque cet écart est supérieur à 0.12 dioptries, préférentiellement 0.06 dioptries, pour au moins une lentille, on peut considérer que l'épaisseur maximale de polissage pour ce matériau obtenue par la mise en oeuvre de ce procédé de polissage est dépassée.

On observera que dans le corps de l'élément optique intermédiaire 10 sont représentées deux lignes en pointillés et deux lignes continues qui suivent chacune sensiblement la forme, en section, des première et deuxième faces 15 et 16 de l'élément optique intermédiaire 10.

Les lignes continues et en pointillés disposées à proximité d'une face respective sont situées à distance l'une de l'autre, laquelle distance correspond à l'épaisseur Se de la surépaisseur 9 respective.

On notera que les lignes continues définissent la géométrie dite cible de la lentille ophtalmique cible 30 à fabriquer tandis que les lignes en pointillés définissent l'épaisseur de la géométrie de l'élément optique intermédiaire 10 à fabriquer.

La géométrie de l'élément optique intermédiaire 10 à fabriquer de manière additive est déterminée en fonction de l'étape de polissage souple.

Ainsi, sur la figure 2, les surépaisseurs 9 apportées aux première et deuxième faces 15 et 16, ont des épaisseurs moyennes référencées Se, qui sont chacune égale à une épaisseur déterminée, référencée e (voir la vue de détail sur la figure 2), laquelle épaisseur correspond à une épaisseur de matière enlevée au cours de l'étape de polissage souple.

En d'autres termes, l'élément optique intermédiaire 10 est ici fabriqué de sorte à présenter une géométrie déterminée, avec deux surépaisseurs 9 représentatives chacune d'une enveloppe géométrique déterminée ménagée de part et d'autre de la lentille cible 30 ; pour ensuite subir une seule et unique étape d'enlèvement de matière par polissage souple, mise en oeuvre par la machine de polissage souple 21 et configurée pour enlever une épaisseur e sur chacune des première et deuxième faces 15 et 16 de l'élément 10.

Cette épaisseur e correspond ici approximativement à l'épaisseur Se des surépaisseurs 9 additionnée des éléments de matière saillant de la « surface virtuelle » de l'élément optique intermédiaire 10 (ligne en pointillés)
Les surépaisseurs 9 et l'épaisseur e (appelée épaisseur déterminée) d'enlèvement de matière sont ici similaires et comprises dans un intervalle de valeurs environ égal à [1µm ; 150µm]. Les surépaisseurs 9 ne sont pas nécessairement identiques sur chacune des deux faces de l'élément optique intermédiaire 10.

On notera que cette étape nécessite que la géométrie de l'élément optique intermédiaire 10 permette de conduire par une unique étape de polissage souple à la géométrie et à la qualité d'état de surface désirées de la lentille ophtalmique cible 30. Il convient donc que l'élément optique intermédiaire 10 soit conçu avec une géométrie qui permette de conduire par une unique étape de polissage souple à la géométrie et à la qualité d'état de surface désirées de la lentille ophtalmique cible 30.

La mise en oeuvre de cette unique étape de polissage souple sur l'élément optique intermédiaire 10 permet d'obtenir la lentille ophtalmique cible 30 illustrée, en section, à droite sur la figure 2, laquelle présente la fonction optique, ici complexe, qui lui est prescrite.

Cette lentille ophtalmique cible 30 ainsi fabriquée comporte un corps présentant une face avant 35 et une face arrière 36 opposée à la face avant 35, et un contour ici identique à celui de l'élément optique intermédiaire 10.

En effet, l'élément optique intermédiaire 10 a ici été fabriqué directement avec un contour adapté à une forme de monture prédéterminée dans laquelle la lentille ophtalmique cible 30 est configurée pour être montée.

La lentille ophtalmique cible 30 présente en outre la fonction optique, ici complexe, qui lui est prescrite.

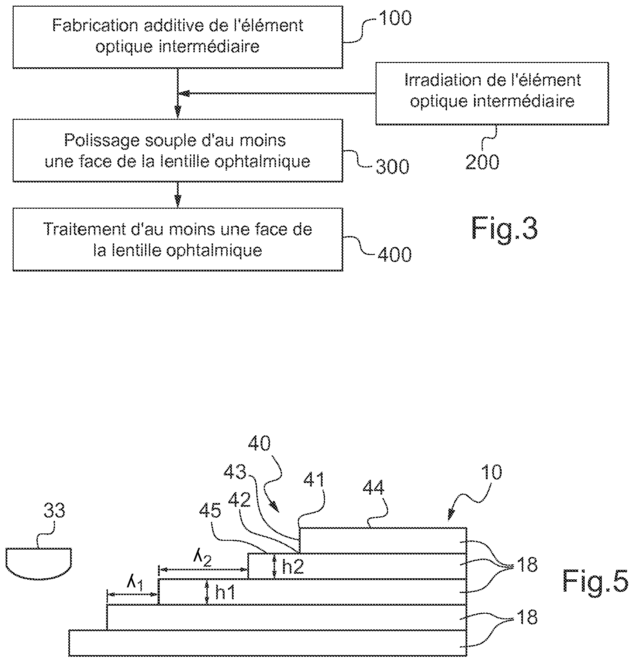

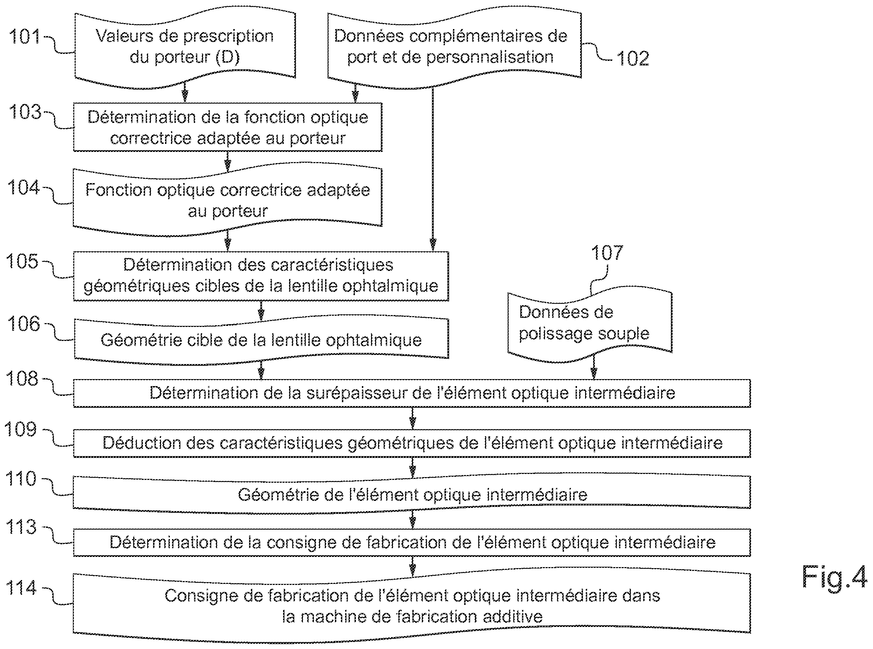

On va maintenant décrire plus en détail en référence aux figures 3 et 4 un procédé de fabrication de cette lentille ophtalmique cible 30.

Le procédé de fabrication comporte l'étape 100 de fabriquer de manière additive l'élément optique intermédiaire 10 avec la machine de fabrication additive 1, selon une géométrie déterminée.

Le procédé comporte optionnellement l'étape 200 d'irradier l'élément optique intermédiaire 10 obtenu. Cette étape 200 consiste à terminer la polymérisation de l'élément optique intermédiaire 10.

Le procédé comporte en outre l'étape 300 de fabriquer la lentille ophtalmique 30 par polissage souple de l'élément optique intermédiaire 10, avec la machine de polissage souple 21.

Le procédé comporte optionnellement l'étape 400 de traiter la face avant et/ou la face arrière de la lentille ophtalmique ainsi obtenue par fabrication additive puis polissage souple, pour y ajouter un ou plusieurs revêtements fonctionnels prédéterminés, par exemple un antibuée et/ou un antireflets et/ou une teinte et/ou un revêtement photochromique et/ou anti-rayures, etc.

La figure 4 illustre des étapes du procédé de fabrication et plus précisément des étapes pour la détermination d'une consigne de fabrication de l'élément optique intermédiaire 10 en vue de sa fabrication additive grâce à la machine de fabrication additive 1 illustrée sur la figure 1 ; et donc en vue de la fourniture de cet élément optique intermédiaire 10 pour l'une des étapes 200 et 300 du procédé illustré sur la figure 4.

L'unité de contrôle et de commande 2 (appelée première unité) de la machine de fabrication additive 1 est configurée pour recevoir à l'étape 101 un fichier comportant des valeurs de prescription d'un porteur de la lentille ophtalmique 30 à fabriquer.

Ces valeurs de prescription du porteur sont généralement exprimées en dioptrie (D).

La première unité 2 est en outre configurée pour recevoir à l'étape 102 des données complémentaires de port et de personnalisation, liées à la fois au porteur, à une monture prévue pour recevoir la lentille ophtalmique 30 et à la prescription.

On notera que ces données complémentaires de port et de personnalisation correspondent par exemple à des valeurs géométriques qui caractérisent notamment la monture et le comportement visuel du porteur. Il peut s'agir par exemple d'une distance entre l'oeil et la lentille et/ou d'une position du centre de rotation de l'oeil, et/ou d'un coefficient oeil-tête, et/ou d'un angle pantoscopique et/ou d'un galbe de la monture et/ou du contour de la monture. Il peut aussi s'agir seulement du positionnement géométrique de la lentille ophtalmique 30 par rapport à l'oeil du porteur.

La première unité 2 est configurée pour déterminer à l'étape 103 une fonction optique correctrice adaptée au porteur à partir des valeurs de prescription porteur et des données complémentaires de port et de personnalisation reçues aux étapes respectives 101 et 102, et en fonction du positionnement géométrique de la lentille 30 par rapport à l'oeil du porteur.

Cette fonction optique correctrice adaptée au porteur correspond à la fonction optique cible de la lentille ophtalmique 30 à fabriquer.

On notera que la détermination de la fonction optique correctrice adaptée au porteur peut être effectuée par exemple à l'aide d'un logiciel de tracé de rayons, lequel permet de déterminer la puissance porteur et l'astigmatisme résultant de la lentille dans les conditions de port de cette dernière. Une optimisation peut être effectuée en suivant des méthodes d'optimisation optique bien connues.

La première unité 2 est configurée pour générer à l'étape 104 un fichier appelé « fonction optique » qui caractérise cette fonction optique correctrice adaptée au porteur déterminée à l'étape 103.

On notera que la fonction optique correctrice adaptée au porteur peut, à la place d'être déterminée par la première unité 2 à l'étape 103, être directement reçue par cette première unité 2 sous forme d'un tel fichier.

La première unité 2 est configurée pour déterminer, à l'étape 105, des caractéristiques géométriques cibles de la lentille ophtalmique 30 à fabriquer, à partir du fichier « fonction optique » généré à l'étape 104 et à partir des données complémentaires de port et de personnalisation reçues à l'étape 102, et en particulier celles liées à la monture prévue pour recevoir la lentille ophtalmique 30.

La première unité 2 est configurée pour générer à l'étape 106 un fichier appelé « géométrie cible » qui caractérise les caractéristiques géométriques de la lentille ophtalmique 30 à fabriquer, déterminées à l'étape 105.

On notera que ce fichier « géométrie cible » est un fichier dit de surface qui est pourvu par exemple de caractéristiques géométriques sous la forme de coordonnées x, y, z, θ, en un nombre fini de points, ou d'une fonction de surface z = f(x, y) définissant chaque face, de caractéristiques liées à un indice de réfraction, de diverses distances et angles tels que ceux mentionnés plus haut. Le fichier « géométrie cible » est représentatif en fait à la fois de la fonction optique et de la géométrie à apporter à la lentille ophtalmique 30.

La première unité 2 est en outre configurée pour recevoir à l'étape 107 un fichier comportant des données de polissage souple de la machine de polissage souple 21. Il peut s'agit par exemple du diamètre de la pupille de polissage et/ou des capacités de lissage (ou filtrage) de la machine qui sont par exemple caractérisées par sa fréquence spatiale de coupure et/ou sa longueur d'onde spatiale de coupure. Il peut s'agir aussi des paramètres techniques de la machine de polissage souple tels que la vitesse de rotation de l'élément optique intermédiaire, la vitesse de balayage, le nombre de balayages, la pression qu'exerce le polissoir sur la surface de l'élément optique, la trajectoire et l'amplitude de balayage du polissoir, les propriétés mécaniques du polissoir (dont ses dimensions et sa structure), la taille, la concentration et/ou la dureté des particules abrasives.

Pour garantir un maximum d'efficacité de filtrage du polissage souple, la longueur d'onde spatiale de coupure de polissage souple est de préférence la plus élevée possible ; tandis que pour être considérée comme non déformante, une étape de polissage souple a de préférence une longueur d'onde spatiale de coupure de polissage souple la plus faible possible.

Pour mettre en oeuvre une étape de polissage souple qui soit efficace pour une lentille ophtalmique, c'est-à-dire qui filtre les aspérités créant des défauts optiques, sans déformer la courbure de l'enveloppe géométrique de la lentille, et qui permet d'obtenir une fonction optique donnée, la longueur d'onde spatiale de coupure de polissage souple doit être de préférence comprise entre environ 0,5 mm et 5 mm, et de préférence entre environ 0,5 mm et 2,5 mm.

La première unité 2 est en outre configurée pour recevoir (étape non représentée) un fichier comportant des caractéristiques liées à l'indice de réfraction du matériau 18 utilisé pour la fabrication additive de l'élément optique intermédiaire 10.

La première unité 2 est configurée pour déterminer, optionnellement, un retrait dimensionnel ainsi qu'une variation d'indice de l'élément optique intermédiaire 10. Il s'agit ici d'évolutions possibles ultérieures, d'une part, de l'indice de réfraction du matériau 18 dans lequel est fabriqué l'élément optique intermédiaire 10 et, d'autre part, de la géométrie (retrait dimensionnel) de l'élément optique intermédiaire 10, par exemple lors d'une étape de recuit.

La première unité 2 est configurée pour déterminer à l'étape 108 les surépaisseurs 9 à apporter à l'élément optique intermédiaire 10 à partir des caractéristiques et valeurs générées ou reçues dans les fichiers au moins aux étapes 106 et 107, respectivement relatifs à la géométrie cible de la lentille ophtalmique 30 à fabriquer, aux données de polissage souple, et à partir de la valeur de l'indice du matériau de fabrication de l'élément optique intermédiaire 10 et des caractéristiques relatives à un éventuel retrait dimensionnel ainsi qu'à une éventuelle variation d'indice de l'élément optique intermédiaire 10.

La première unité 2 est configurée pour déduire à l'étape 109 des caractéristiques géométriques de l'élément optique intermédiaire 10 à fabriquer à partir des valeurs de l'épaisseur Se des surépaisseurs 9 déterminées à l'étape 108, prises en combinaison avec le fichier « géométrie cible » généré à l'étape 106 et des données caractéristiques de l'étape de polissage souple prédéterminée.

On notera que ces caractéristiques géométriques de l'élément optique intermédiaire 10 sont ainsi déduites de manière à ce que les surépaisseurs soient représentatives de l'écart de géométrie entre la géométrie cible de la lentille ophtalmique 30 et la géométrie de l'élément optique intermédiaire 10.

La première unité 2 est en outre configurée pour générer, à l'étape 110, en fonction de l'étape postérieure de polissage souple, un fichier qui caractérise les caractéristiques géométriques de l'élément optique intermédiaire 10 déduites à l'étape 109 et représentatives de la géométrie souhaitée.

Ce fichier comporte de préférence des caractéristiques géométriques de l'élément optique intermédiaire et/ou des surépaisseurs, et éventuellement de la lentille ophtalmique. Il s'agit d'un fichier dit de surface qui est pourvu par exemple de caractéristiques géométriques sous la forme de coordonnées x, y, z, θ, ou d'une fonction de surface z = f(x, y) définissant chaque face, en un nombre fini de points, de caractéristiques liées à un indice de réfraction, de diverses distances et angles tels que ceux mentionnés plus haut.

Autrement dit, ce fichier dit de surface reflète une description de la géométrie souhaitée pour l'élément optique intermédiaire 10 à fabriquer, avec en pratique un agencement déterminé des éléments de volume prédéterminés du ou des matériaux.

Ce fichier de surface peut par exemple être visualisé sous la forme de données de modélisation 3D typiquement dans un fichier de conception CAO afin de représenter l'élément optique intermédiaire comportant la lentille ophtalmique cible et les surépaisseurs, en tant qu'objet numérique.

La géométrie de l'élément optique intermédiaire 10 est ici déterminée de sorte à être directement adaptée au contour de la monture dans laquelle la lentille 30 est configurée pour être montée. Une étape de détourage n'est donc pas nécessaire. En variante, le contour de l'élément 10 défini dans ce fichier ne correspond pas au contour de la monture et une opération de détourage est nécessaire.

La première unité 2 est en outre configurée pour déterminer à l'étape 113 la consigne de fabrication de l'élément optique intermédiaire 10, à partir des caractéristiques que comporte le fichier généré à l'étape 110 relatif à la géométrie de l'élément optique intermédiaire 10.

La première unité 2 est configurée pour générer à l'étape 114 le fichier de fabrication correspondant à la consigne de fabrication de l'élément optique intermédiaire 10 sur le support de fabrication 12 de la machine de fabrication additive 1 (dans un repère connu de cette machine).

Ce fichier « consigne » est similaire au fichier de géométrie de l'élément optique intermédiaire 10 généré à l'étape 110, si ce n'est qu'il reflète une description transcrite de la géométrie souhaitée de cet élément optique intermédiaire 10 à fabriquer, avec en pratique, un agencement des éléments de volume prédéterminés du ou des matériaux, par rapport à un référentiel de la machine de fabrication additive, et un ordre de dépôt des éléments de volume les uns par rapport aux autres.

On notera ici que tant la géométrie de l'élément optique intermédiaire 10 que l'agencement et l'ordre de dépôt des voxels sont déterminés en fonction d'une ou de plusieurs stratégie de fabrication additive de sorte à former dans l'élément optique intermédiaire 10 des zones de fabrication de différents types.

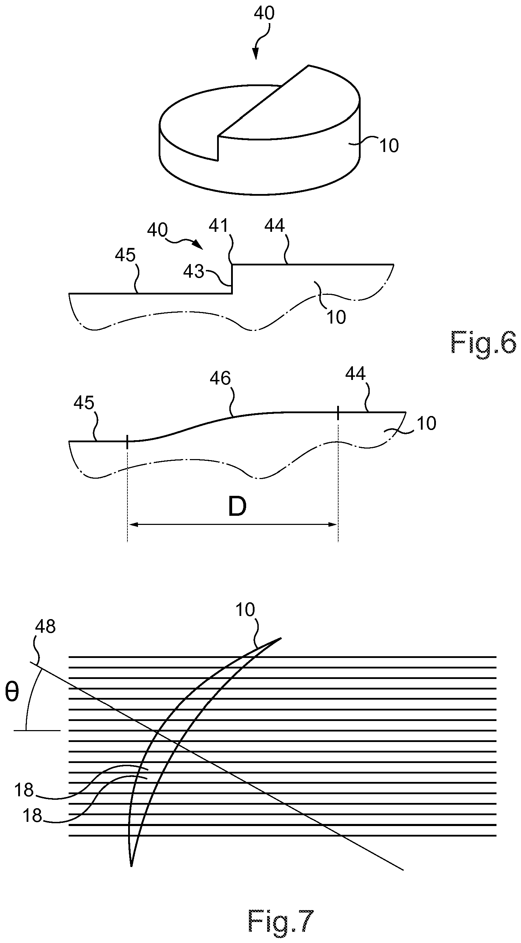

Ces stratégies de fabrication additive peuvent par exemple inclure une inclinaison déterminée de l'élément optique intermédiaire 10 sur le support de fabrication 12 pour sa fabrication et/ou une fabrication améliorée en quantité de matériau apporté et/ou en qualité de matériau apporté (voir ci-après en référence aux figures 7 à 12).

Ces différentes stratégies de fabrication peuvent par exemple être prises en considération durant l'étape 108 de détermination des surépaisseur 9 de l'élément optique intermédiaire 10, ou au moment de la détermination de la géométrie de cet élément optique intermédiaire 10 (étape 110).

On notera également que les données de ce fichier sont aussi représentatives des modifications liées à un éventuel retrait dimensionnel ainsi qu'à une éventuelle variation d'indice de l'élément optique intermédiaire 10.

La première unité 2 peut aussi être configurée pour lancer à la fabrication additive de l'élément optique intermédiaire 10 sur le support de fabrication 12 dans la machine de fabrication additive 1, sur la base des caractéristiques du fichier de fabrication généré à l'étape 114 (étape 100 sur la figure 3).

Cette première unité de contrôle et de commande 2 est donc configurée pour exécuter un logiciel pour la mise en oeuvre de différentes étapes du procédé de fabrication de la lentille ophtalmique, en utilisant les paramètres reçus, afin de déterminer la consigne de fabrication de l'élément optique intermédiaire 10, voire de le réaliser.

L'unité de contrôle et de commande 22 (appelée deuxième unité) de la machine de polissage souple 21 est quant à elle configurée pour mettre en oeuvre un procédé de polissage souple prédéterminé, présentant des données de polissage similaires à celles reçues par la première unité 2 à l'étape 107, et prises en compte lors de la détermination des surépaisseurs 9 et de l'élément optique intermédiaire 10.

Ces données de polissage sont identiques à celles mentionnées plus haut, à savoir le diamètre de la pupille de polissage et/ou les capacités de lissage (ou filtrage) de la machine qui sont par exemple caractérisées par sa fréquence spatiale de coupure et/ou sa longueur d'onde spatiale de coupure. Il peut s'agir aussi des paramètres techniques de la machine de polissage souple tels que la vitesse de rotation de l'élément optique intermédiaire, la vitesse de balayage, le nombre de balayages, la pression qu'exerce le polissoir sur la surface de l'élément optique, la trajectoire et de l'amplitude de balayage du polissoir, les propriétés mécaniques du polissoir (dont ses dimensions et sa structure), la taille, la concentration et/ou la dureté des particules abrasives.

La deuxième unité 22 est configurée pour lancer une seule et unique étape de polissage souple d'au moins une face 15, 16 de l'élément optique intermédiaire 10 obtenu sur le support de fabrication 32 dans la machine de polissage souple, afin d'enlever l'épaisseur de matière déterminée e au moyen d'une pupille de polissage similaire à celle définie et utilisée pour déterminer l'enveloppe géométrique de l'élément optique intermédiaire 10, et ainsi générer la lentille ophtalmique 30 avec sa fonction optique prescrite et ayant des faces 35 et 36 qui présentent une rugosité de qualité optique.

En variante, plusieurs étapes successives de polissage souple d'une même face peuvent être effectuées.

On va maintenant décrire plus en détails des variantes de mises en oeuvre du procédé et en particulier de l'étape de détermination de la consigne de fabrication, en fonction de la stratégie de fabrication améliorée choisie.

La figure 5 illustre un détail de la surface de l'élément optique intermédiaire 10 représenté sur la figure 2, au niveau de sa première face (non représentée) et une représentation de la pupille de polissage 33 de diamètre prédéterminé, par exemple compris entre environ 0,5 mm et environ 2,5 mm, laquelle pupille est caractéristique de l'étape de polissage souple.

Sur ce détail sont représentées partiellement cinq couches superposées de matériau 18, couches dont on voit les extrémités au niveau de la première face. En surface de l'élément optique intermédiaire 10, au niveau de la jonction entre deux couches immédiatement superposées dont l'épaisseur (ou la hauteur) h (h₁, h₂) est prédéterminée, est formée une marche de longueur λ (λ₁, λ₂). Ici, la hauteur et la longueur de deux marches sont représentées, respectivement h₁ et λ₁ et h₂ et λ₂.

Sur ce détail sont également représentées les aspérités 40 formées au niveau des couches successives et en particulier à l'interface de chaque paire de couches superposées.

Chaque aspérité est ici pourvue d'un pic 41, aussi appelé point haut, qui se trouve à l'extrémité libre à la surface supérieure 44 d'une couche supérieure, et un creux 42, aussi appelé point bas, qui se trouve à la jonction entre l'extrémité de couche supérieure et la couche immédiatement inférieure.

Chaque aspérité 40 est en outre pourvue d'un épaulement 43 ménagé entre le pic 41 et le creux 42 et sensiblement représentatif de la hauteur d'un voxel situé à l'extrémité de la marche.

La figure 6 illustre de façon très schématique, en perspective et en section, une aspérité 40 prise isolément, ici de type marche, avant son polissage par une étape de polissage souple, et également en section, cette aspérité 40 après polissage au moyen de la machine de polissage souple 21.

L'aspérité 40 avant polissage souple est identique à celle décrite ci-dessus en référence à la figure 5.

Après la mise en oeuvre de l'étape de polissage souple, l'aspérité a disparu ou presque pour former une surface sensiblement incurvée 46 dite polie, laquelle surface polie rejoint à la fois la surface supérieure 44 de la couche supérieure et la surface inférieure 45 de la couche inférieure.

On notera que cette surface 46 correspond, après polissage souple, à une zone de la face de la lentille dont le diamètre est ici sensiblement similaire à celui de la pupille de polissage. On note D la largeur de cette zone. Cette zone de la face de la lentille est une zone d'action de la pupille de polissage sur l'aspérité isolée présente sur la face de l'élément optique intermédiaire 10 avant polissage souple. La largeur de cette zone correspond sensiblement à la longueur d'étalement de l'aspérité après polissage souple.

La figure 7 illustre une première stratégie de fabrication additive améliorée.

Ici, l'élément optique intermédiaire 10 est incliné d'un angle θ, déterminé lors des étapes 108 à 114, par rapport à un axe prédéterminé 48 de construction additive, dit axe de stratification, selon lequel la pluralité d'éléments de volume prédéterminés d'au moins un matériau est déposée.

La technologie de fabrication additive fonctionne par dépôt de plusieurs couches de voxel les unes sur les autres de sorte à fabriquer un volume formé de plusieurs couches superposées selon un axe de stratification qui correspond ici à un axe normal aux couches.

On notera que l'angle d'inclinaison θ est déterminé se sorte qu'au moins dans une zone déterminée de la face de l'élément optique intermédiaire 10, les aspérités 40 sont espacées les unes des autres d'une distance inférieure à une distance critique déterminée en fonction du diamètre de la pupille de polissage.

La distance critique est ici inférieure ou égale à la moitié, voire au quart, préférentiellement au dixième, du diamètre de la pupille de polissage.

On notera que la consigne de fabrication de l'élément optique intermédiaire 10 est configurée pour que lesdites aspérités soient concentrées sur une surface utile de l'élément optique intermédiaire 10.

Par surface utile, on entend ici une surface de l'élément optique intermédiaire, dont le contour correspond à un contour adapté à la forme de la monture prédéterminée dans laquelle la lentille ophtalmique cible 30 est configurée pour être montée.

Une telle stratégie de fabrication permet avantageusement d'augmenter le nombre de sauts de marches (pics et creux) et donc d'aspérités sur la face de l'élément optique intermédiaire 10, en comparaison avec une fabrication additive sans inclinaison de l'élément 10 durant sa fabrication.

Ainsi, lors de l'étape de polissage souple, la pupille de polissage attaque un plus grand nombre d'aspérités sur une même zone.

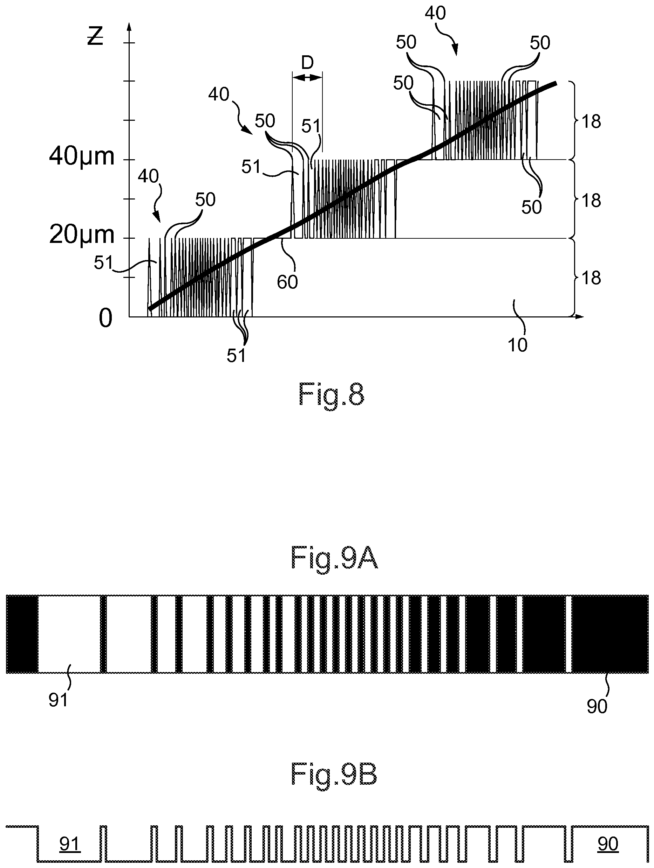

La figure 8 illustre une deuxième stratégie de fabrication additive améliorée, alternative ou complémentaire à la première stratégie.

Ici, la consigne de fabrication de l'élément optique intermédiaire 10 est déterminée selon une stratégie de fabrication améliorée en quantité de matériau apporté, qui s'apparente à une stratégie où l'on choisit de déposer ou non des éléments de volume prédéterminés du matériau et donc d'introduire ou non des trous qui correspondent à des interruptions dans les couches de matériau.

Plus précisément, la consigne de fabrication de l'élément optique intermédiaire 10 est déterminée de sorte que ce dernier présente, en section, au niveau d'au moins une de ses faces 15 et 16, des zones de fabrication d'un premier type qui sont pourvues chacune d'une pluralité de premières portions 50 et de deuxièmes portions 51 formées en alternance.

Les premières portions 50 sont chacune pourvues d'éléments de volume prédéterminé du matériau et les deuxièmes portions 51 sont chacune au moins partiellement dépourvues d'éléments du matériau.

Ainsi, cette construction incluant des interruptions de couches permet de former des aspérités sur ces zones de fabrication du premier type, avec ces aspérités 40 qui sont espacées les unes des autres d'une distance inférieure à une distance critique déterminée en fonction du diamètre de la pupille de polissage.

La distance critique est ici inférieure ou égale à la moitié, voire au quart, préférentiellement au dixième, du diamètre de la pupille de polissage.

Cette stratégie d'optimisation permet de créer de nombreuses interruptions de couches pour toute paire de couches d'éléments de matière. Ainsi, dans l'exemple de la figure 8, alors que la structure ne comporte que trois couches de matière, ayant chacune une épaisseur comprise entre 5 µm et 50 µm, il est formé environ 60 interruptions de couches, soit environ 120 fronts de couche selon l'axe de coupe de cette figure. Cette stratégie peut être ainsi apparentée à un brouillage d'un saut de couches, permettant de former, au niveau d'une surface, un passage d'une couche à une autre grâce à de multiples interruptions de couches.

La consigne de fabrication de l'élément optique intermédiaire 10 est configurée pour que lesdites aspérités soient concentrées sur une surface utile de l'élément optique intermédiaire 10.

Une telle stratégie de fabrication permet avantageusement d'augmenter le nombre de sauts de marches (pics et creux) et donc d'aspérités sur la face de l'élément optique intermédiaire 10, en comparaison avec une fabrication additive sans fabrication améliorée en quantité de matériau.

Ainsi, lors de l'étape de polissage souple, la pupille de polissage attaque un plus grand nombre d'aspérités sur une même zone.

Les zones de fabrication du premier type peuvent être pourvues d'éléments de volume prédéterminés d'un matériau ou de plusieurs matériaux distincts.

Les zones de fabrication du premier type sont ici définies par un cylindre glissant d'axe normal à la surface de la lentille ophtalmique cible 30, avec le volume total de la surépaisseur 9 dans ce cylindre glissant qui est sensiblement constant. Le cylindre glissant présente ici un diamètre similaire à celui de la pupille de polissage caractéristique de l'étape de polissage souple. L'élément optique intermédiaire 10 est ici fabriqué de sorte qu'il présente plusieurs zones de fabrication du premier type qui sont formées sur des couches distinctes, et qui ne se chevauchent pas.

En d'autres termes, chaque zone de fabrication du premier type est ménagée sur une couche sans empiéter sur une autre couche.

En variante, au moins une des zones de fabrication du premier type peut être formée sur une couche qui chevauche une couche immédiatement inférieure.

En variante encore, au moins une des zones de fabrication du premier type peut être formée sur deux couches distinctes immédiatement superposées.

On notera que la quantité de matériau dans le cylindre glissant, représentée par le profil 60 sur la figure 8, est sensiblement égale à la quantité de matériau "vue" lorsque le cylindre glissant suit le profil de la surface cible correspondante, de façon à ce que la courbe 60 et la surface cible soient sensiblement égales.

En d'autres termes, une zone de fabrication du premier type, où une stratégie d'optimisation est mise en oeuvre, s'étend généralement sur une portion du profil de la surface cible de la lentille à fabriquer. Cette zone du premier type présente par exemple un surplus prédéterminé de voxels formant un volume de la surépaisseur. Ce volume vu le long de la portion du profil est sensiblement constant. Cela signifie que si l'on considère un élément ayant un volume interne et se déplaçant le long de la portion du profil de la lentille cible, cet élément comporte dans son volume interne, en toute position sur la portion du profil, sensiblement la même quantité de matériau qui forme la surépaisseur. Cet élément est ici appelé le cylindre glissant.

On notera également que les éléments de volume prédéterminés, dits voxels, peuvent avoir des tailles différentes au cours de la construction dans les zone de fabrication du premier type ; et/ou que les premières portions ne présentent pas toutes les mêmes dimensions dans une zone du premier type. Par exemple les largeurs sont différentes et/ou les hauteurs sont différentes. Une première portion peut être à une distance prédéterminée d'une autre première portion, séparées par une deuxième portion, laquelle distance peut être inférieure à la largeur minimale d'un voxel.

On notera que cette stratégie de fabrication améliorée en quantité de matériau peut ne pas être uniquement une dispersion de voxels de même volume. En effet, les premières et deuxièmes portions peuvent comporter un ou plusieurs voxels plus gros, ou plus petits, que les voxels d'au moins une portion mitoyenne.

Ainsi, il est possible d'introduire une variation du volume des voxels dispersés pour obtenir plusieurs états de portions, à savoir état vide où aucun voxel n'est déposé, état creux où un voxel de taille dite petite par rapport à la taille moyenne des voxels de la couche est déposé, état plein où un voxel de taille moyenne est déposé, et état trop-plein où un voxel de taille plus grosse que la taille moyenne est déposé.

L'utilisation de voxels de différents volumes, lorsque cela est possible (fonction de la technologie utilisée de fabrication additive), permet d'obtenir une grande souplesse dans la fabrication améliorée puisque seule la taille minimale des voxels est fixée.

Lorsque la technologie utilisée ne permet pas de déposer des voxels de volume variable, les creux ne sont pas limités à la dimension d'un voxel. En effet, il est possible de déposer des voxels de façon à créer un creux circonscrit entre lesdits voxels, le creux étant légèrement plus petit ou plus grand qu'un voxel ou qu'un volume multiple de la dimension d'un voxel.

Les figures 9A et 9B, 10A et 10B et 11A à 11C illustrent respectivement trois variantes de réalisation de la deuxième stratégie de fabrication additive améliorée.

Les figures 9A et 9B schématisent en particulier un système de brouillage de saut de couches à motif sensiblement radial, c'est-à-dire qui s'étend selon un axe dit de plus forte de pente appliqué à la lentille ophtalmique.

Ce système de brouillage se caractérise par des successions d'interruptions de couches qui forment une unique transition d'une couche n à une couche n+1, et qui sont observables, soit en vue de dessus (figure 9A), soit grâce à une vue en coupe (figure 9B), prise selon un axe local de plus forte pente ici radial pour une lentille ophtalmique.

Sur la figure 9A est ainsi illustré un contour de front de couche brouillé par une succession d'alternances de premières bandes 90 de la couche n+1, en noire, séparées par des secondes bandes 91 où la couche n+1 est absente et la couche n est en surface.

Sur la figure 9B, on peut observer que les premières bandes 90 présentent une largeur qui, dans le sens de la coupe, augmente en direction d'une région de plus haute altitude moyenne (de la gauche vers la droite sur la figure 9B) ; tandis que les secondes bandes 91 présentent une largeur qui, dans le sens de la coupe, augmente en direction d'une région de plus basse altitude moyenne (de la droite vers la gauche sur la figure 9B).

Cette succession de premières bandes 90 et de secondes bandes 91 est donc représentative d'un brouillage radial de la courbure de la lentille ophtalmique.

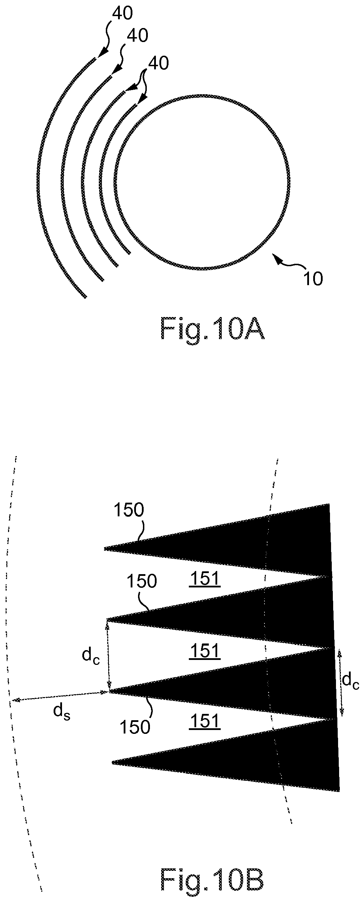

Les figures 10A et 10B, schématisent partiellement l'élément optique intermédiaire 10, en vue globale (figure 10A) et en vue de détail (figure 10B), focalisant sur une autre variante du brouillage d'un saut de couches.

Ici, la consigne de fabrication de l'élément optique intermédiaire 10 est aussi déterminée selon une stratégie de fabrication améliorée en quantité de matériau apporté, qui s'apparente à une stratégie où l'on choisit de déposer ou non des éléments de volume prédéterminés du matériau et donc par exemple d'introduire ou non des trous qui correspondent à des interruptions dans les couches de matériau.

La consigne de fabrication de l'élément optique intermédiaire 10 est donc ici aussi déterminée de sorte que ce dernier présente, en section, au niveau d'au moins une de ses faces, des zones de fabrication d'un premier type qui sont pourvues chacune d'une pluralité de premières portions 150 et de deuxièmes portions 151 formées en alternance.

Les premières portions 150 sont chacune pourvues d'éléments de volume prédéterminés du matériau et les deuxièmes portions 151 sont chacune au moins partiellement dépourvues d'éléments du matériau.

A la différence de la stratégie illustrée sur les figures 9A et 9B où l'alternance des premières et deuxièmes bandes 90 et 91 s'étend de façon radiale, c'est-à-dire au moins selon une direction générale globalement parallèle à un axe de plus forte pente entre les couches, l'alternance des premières et deuxièmes portions 150 et 151 s'étendent ici principalement selon une direction générale globalement perpendiculaire à l'axe de plus forte pente entre les couches. En particulier, dans une lentille ophtalmique, l'alternance des premières et deuxièmes portions se fait donc selon une direction globalement ortho-radiale par rapport à l'axe optique de la lentille. Cette direction peut être un axe local, ou une courbe, sensiblement ortho-radiale par rapport à la courbure de la lentille finale.

Cette succession de premières portions 150 et de deuxièmes portions 151 est donc ici représentative d'un brouillage ortho-radial de la courbure de la lentille ophtalmique.

Sur cet exemple, non limitant, les premières portions et les deuxièmes portions, sont agencées de la manière la plus simple possible, c'est-à-dire de façon à ne former en réalité qu'une unique première portion et une unique deuxième portion. Ainsi, dans ce mode de réalisation, il y a un unique front de couche pour chaque couche, malgré une production d'une multiplicité d'interruptions de couches si l'on se place selon une direction orthogonale à un axe de plus forte pente.

La structure de la figure 10B peut ici être décrite au moyen d'une analogie géographique, avec l'axe de la gravité correspondant à l'axe de stratification, comme une succession de promontoires de la première zone, imbriquée avec une succession de vallées, formant les deuxièmes zones. Les promontoires et les vallées ont des extrémités en forme de pics orientés selon une direction de plus forte pente, les extrémités des promontoires sont dirigées vers une région de plus faible altitude et les extrémités des vallées sont dirigées vers une région de plus haute altitude. Les extrémités des promontoires sont séparées par environ la distance critique et les extrémités des vallées sont aussi séparées par environ la distance critique.

Les sauts de couches 40 illustrés sur la figure 10A sont représentés schématiquement par les lignes en pointillés sur la vue de dessus de l'élément optique intermédiaire 10, en figure 10B. On notera que ces sauts de couches 40 correspondraient à des fronts de couches ou des aspérités si aucune stratégie de fabrication additive améliorée n'était appliquée.

On observera que les pics de deux premières portions 150 consécutives sont ici espacés d'une distance inférieure ou égale à environ la distance critique déterminée, notée dc.

On observera également que les pics des premières portions 150 sont ici distants d'éléments formant le saut de couches adjacent d'une distance notée ds sensiblement de l'ordre de grandeur de la distance critique déterminée dc.

De la même manière que la stratégie de fabrication illustrée sur la figure 8, les zones de fabrication du premier type peuvent être pourvues d'éléments de volume prédéterminés d'un matériau ou de plusieurs matériaux distincts.

Les zones de fabrication du premier type sont ici aussi définies par un cylindre glissant d'axe normal à la surface de la lentille ophtalmique cible, ne traversant pas toute la lentille, avec le volume total de la surépaisseur dans ce cylindre glissant qui est sensiblement constant. Le cylindre glissant présente ici un diamètre similaire à celui de la pupille de polissage caractéristique de l'étape de polissage souple.

On notera que la quantité de matériau dans le cylindre glissant est sensiblement égale à la quantité de matériau "vue" lorsque le cylindre glissant suit le profil de la surface cible correspondante.

Comme mentionné plus haut, cela signifie que si l'on considère un élément ayant un volume interne et se déplaçant le long de la portion du profil, cet élément comporte dans son volume interne, en toute position sur la portion du profil, la même quantité de matériau qui forme la surépaisseur. Cet élément est ici appelé le cylindre glissant.

Le profil des premières portions 150 peut être différent de celui illustré sur la figure 10B, à savoir un profil denté avec des rampes droites. Par exemple, le profil peut être denté avec des rampes courbes, concaves et/ou convexes.

Sur la figure 10B ne sont représentées que des zones du premier type qui correspondent à un unique saut de couches, mais bien entendu, de telles zones du premier type pourraient être formées pour les autres sauts de couches illustrés en figure 10A. On notera que les pics des premières portions 150 des zones illustrées sur la figure 10B, lesquelles correspondent à un saut de couches, pourraient pénétrer des creux d'autre zones de fabrication du premier type qui ne sont pas illustrées et qui correspondent au saut de couches adjacent, et inversement. Dans ce cas, les distances séparant les pics interpénétrés des zones du premier type relatives aux deux sauts de couches sont espacées d'une distance inférieure à la distance critique déterminée.

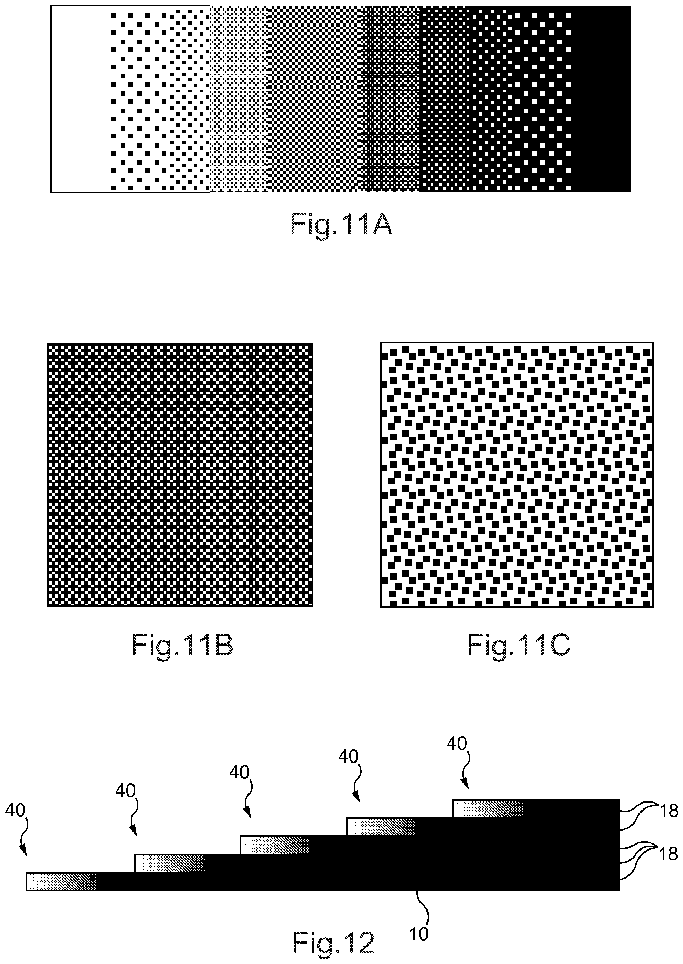

Les figures 11A, 11B et 11C schématisent un autre système de brouillage de sauts de couches à motifs dispersés. Ici, les successions d'interruptions de couches qui permettent de former une unique transition d'une couche n à une couche n+1 sont observables en vue de dessus.

Ces successions d'interruptions de couches sont configurées de sorte que les alternances des premières et deuxièmes portions sont agencées à la fois selon des axes de coupe sensiblement radiaux et selon des axes de coupe sensiblement ortho-radiaux (au sens explicité ci-dessus), respectivement selon l'axe de plus forte pente ou perpendiculairement à cet axe.

La figure 11A montre schématiquement une analogie à l'impression jet d'encre de ce système de brouillage de sauts couches représentatif d'une stratégie de fabrication additive améliorée.

Une série de motifs formés par les premières zones et les secondes zones sont illustrés et permet de brouiller un unique saut de couches entre une couche n et une couche n+1. Cette série présente un premier motif uniformément blanc, représentatif d'un niveau de la couche n, et un deuxième motif uniformément noir, représentatif d'un niveau de la couche n+1. Entre ces premier et deuxième motifs sont présents plusieurs autres motifs intermédiaires comprenant différents arrangements de régions noires et de régions blanches. Ces motifs intermédiaires sont arrangés de façon à ce que les motifs qui comportent le plus de noir, c'est-à-dire ceux comportant des premières zones qui recouvrent une majeure partie de ces motifs, sont les plus proches du second motif au niveau de la couche n+1; et les motifs qui comportent le plus de blanc, c'est-à-dire ceux comportant des deuxièmes zones qui recouvrent une majeure partie de ces motifs, sont les plus proches du premier motif au niveau de la couche n.

Ainsi, au sein d'un même motif intermédiaire, les premières et deuxièmes zones ont des tailles et des répartitions telles que la matière est répartie de la manière la plus uniforme possible. Cependant, il est clair pour l'homme du métier que cette variante de l'invention n'est pas limitée aux motifs spécifiquement illustrés.

Les figures 11B et 11C illustrent, en vue de dessus, deux motifs très différents qui présentent des densités moyennes de noir et de blanc sensiblement équivalentes.

Dans le motif illustré sur la figure 11B, les premières zones sont sensiblement en forme de croix de trois voxels par trois voxels. Les croix des premières zones sont alignées les unes par rapport aux autres, au moins avec quatre voisins et sont séparés les unes des autres par des deuxièmes zones formées chacune par l'absence d'un unique voxel.

Dans le motif illustré sur la figure 11C, les premières zones sont sensiblement en forme de carrés d'environ trois voxel sur trois voxels. ; Les carrés des premières zones ne sont pas alignés avec les carrés voisins et ils sont séparés les uns des autres par une unique deuxième zone, continue entre toutes les premières zones.

La figure 12 illustre une troisième stratégie de fabrication additive améliorée, alternative ou complémentaire à la première stratégie et/ou à la deuxième stratégie.

Ici, la consigne de fabrication de l'élément optique intermédiaire 10 est déterminée selon une stratégie de fabrication améliorée en qualité de matériau apporté, qui s'apparente à une stratégie où l'on choisit de déposer des éléments de volume prédéterminés d'un ou plusieurs matériaux, avec ces éléments de volume prédéterminés qui présentent des propriétés d'abrasabilité distinctes.

Plus précisément, la consigne de fabrication de l'élément optique intermédiaire 10 est déterminée de sorte que ce dernier présente, en section, au niveau d'au moins une de ses faces 15 et 16, des zones de fabrication d'un deuxième type qui sont pourvues chacune d'éléments de volume prédéterminés d'un ou plusieurs matériaux présentant des propriétés d'abrasabilité distinctes.

Cette construction incluant des éléments de volume prédéterminés de propriété d'abrasabilité variable permet de former des zones de fabrication particulièrement adaptées au polissage souple.

Chaque zone de fabrication du deuxième type est ici définie de manière à former une marche et ainsi une aspérité 40 formée d'un pic et d'un creux et dont la difficulté d'abrasion est variable.

On notera que le ou les éléments de volume prédéterminés qui sont à proximité immédiate de l'aspérité ou qui forment le pic et le creux sont ici plus facile à abraser que le ou les éléments de volume prédéterminés qui sont à distance de ce pic et de ce creux. Par exemple, plus on se rapproche du pic et du creux de l'aspérité 40, plus le ou les éléments de volume prédéterminés sont formés par un matériau friable par rapport à celui utilisé pour le corps de l'élément optique intermédiaire, ou sont formés par un matériau comportant un agent de porosité.

Les voxels déposés peuvent ainsi avoir des résistances à l'abrasabilité qui diffèrent d'un voxel à l'autre. Cela est possible par exemple par ajout à un matériau principal, en proportion déterminée, soit d'un agent porogène qui conduit à former un voxel en matériau poreux avant l'étape de polissage, soit d'un agent augmentant la résistance à l'abrasion tel que des nano particules de silice ou de zircone ou d'un autre oxyde.

Alternativement, les voxels peuvent avoir une résistance à l'abrasabilité différente entre un voxel et un autre voxel grâce au mélange, en proportion variable, de deux matériaux d'abrasabilité différente. Enfin, les voxels peuvent avoir une résistance à l'abrasabilité différente entre un voxel et un autre voxel par variation d'un degré de polymérisation entre ceux-ci.

L'élément optique intermédiaire 10 est ici fabriqué de sorte qu'il présente plusieurs zones de fabrication du deuxième type qui sont formées sur des couches distinctes, mais qui ne se chevauchent pas.

En d'autres termes, chaque zone de fabrication du deuxième type est ménagée sur une couche sans empiéter sur une autre couche.

En variante au moins une des zones de fabrication du deuxième type peut être formée sur une couche qui chevauche une couche immédiatement inférieure.

En variante encore, au moins une des zones de fabrication du deuxième type peut être formée sur deux couches distinctes immédiatement superposées.

On notera que la fabrication de l'élément optique intermédiaire 10 peut être réalisée en mettant en oeuvre une ou plusieurs des trois stratégies de fabrication améliorée illustrées aux figures 7 à 9.

Autrement dit, l'élément optique intermédiaire 10 peut par exemple présenter des zones de fabrication du premier type et du deuxième type sur une même couche et/ou sur des couches distinctes.

Dans une variante non illustrée, une interface de communication client-serveur comporte un côté dit fournisseur et un autre côté dit client, ces deux côtés communicant via un réseau, par exemple du type internet.

Le côté fournisseur comporte un serveur relié à des unités de contrôle et de commande du même type que celles de la figure 1, mais cette fois-ci non intégrées à un système de fabrication et en particulier aux machines de fabrication additive et de polissage souple, ce serveur étant configuré pour communiquer avec l'interface internet.

Le côté client est configuré pour communiquer avec l'interface internet, et est relié à une ou plusieurs unités de contrôle et de commande du même type que celles du côté fournisseur.

En outre, la ou les unités côté client sont reliées à une machine de fabrication additive du même type que celle de la figure 1 pour fabriquer l'élément optique intermédiaire et à au moins une machine de polissage souple pour fabriquer la lentille ophtalmique à partir de l'élément optique intermédiaire.

La ou les unités côté client sont configurées pour recevoir les fichiers de données correspondant aux étapes 101, 102 et 107, et les données caractéristiques du matériau utilisé.

La ou les unités côté client envoient par l'intermédiaire de l'interface internet et du serveur ces données à la ou aux unités côté fournisseur pour la détermination de la consigne de fabrication de l'élément optique intermédiaire et pour la détermination de la consigne de fabrication de la lentille ophtalmique.

La ou les unités côté fournisseur exécutent via son système de traitement de données le programme d'ordinateur qu'il contient pour mettre en oeuvre le procédé de fabrication et ainsi déduire d'une part la consigne de fabrication pour fabriquer l'élément optique intermédiaire et d'autre part la consigne de fabrication pour fabriquer la lentille ophtalmique.

La ou les unités côté fournisseur envoient, par l'intermédiaire du serveur et du réseau, un fichier représentatif de la consigne de fabrication de l'élément optique intermédiaire et un fichier représentatif de la consigne de fabrication de la lentille ophtalmique déterminés, à la ou aux unités de contrôle et de commande côté client.

La ou les unités côté client sont configurées pour exécuter un logiciel pour la mise en oeuvre du procédé de fabrication de la lentille ophtalmique, en utilisant les paramètres reçus, afin de réaliser l'élément optique intermédiaire puis la lentille ophtalmique.

Dans une variante non illustrée, les étapes de fabrication additive puis de polissage souple peuvent être suivies du dépôt d'un film de vernis choisi afin de pallier à des irrégularités de surface restantes. En particulier il est ici fait référence à des couches de vernis telles que celles présentées dans les demandes de brevets EP1896878 de la demanderesse, ou JP 2002-182011 qui sont configurées pour permettre à une surface ayant une certaine qualité très proche de la qualité ophtalmique d'atteindre cette qualité ophtalmique. Tout comme le polissage souple, l'application de cette couche de vernis ne modifie les courbures principales de la surface de la lentille, telles que la courbure principale ou un motif dessinant la ou les additions.

Dans des variantes non illustrées :
- le système de fabrication ne comporte qu'une seule et même machine dans laquelle sont intégrés des dispositifs de fabrication additive et de polissage souple ;
- la pluralité d'éléments de volume prédéterminés juxtaposés et superposés forme des couches superposées qui présentent chacune une épaisseur constante ou variable sur la longueur et/ou qui présentent toutes la même épaisseur ou pas ;
- le matériau est par exemple un matériau transparent déposé par stéréolithographie, tel que par exemple un polymère époxy commercialisé par la société 3D SYSTEMS sous la marque Accura® ClearVue ;
- le matériau est une composition photopolymérisable comportant une ou plusieurs familles de molécules ayant une ou plusieurs fonctions acryliques, methacryliques, acrylates, methacrylates, une famille de molécules ayant une ou plusieurs fonctions époxy, thioépoxy, thiol-ène, une famille de molécules ayant une ou plusieurs fonctions vinyle éther, vinyle caprolactame, vinylpyrolidone, une famille de matériau de type hyperbranchée, de type hybride organique/inorganique, ou une combinaison de ces fonctions ; les fonctions chimiques mentionnées pouvant être portées par des monomères ou des oligomères ou une combinaison de monomères et oligomères ;
- le matériau peut comporter au moins un photo-initiateur ;
- le matériau peut comporter des colloïdes, en particulier des particules colloïdales ayant des dimensions par exemple inférieures aux longueurs d'onde visibles, telles que par exemple des particules colloïdales d'oxyde de Silice SiO2 ou des particules colloïdales d'oxyde de Zircone ZrO2 ;
- le matériau peut comporter, dans au moins certains des éléments de volume prédéterminés, un pigment ou un colorant, par exemple un colorant qui appartient aux familles des azo, ou rhodamines, ou cyanines, ou polymethines, ou merocyanines, ou fluorescéines, ou pyrylium, ou phtalocyanines, ou pérylènes, ou benzanthrones, ou anthrapyrimidines, ou anthrapyridones, ou encore un colorant pourvu de complexes métalliques tels que des chélates ou des cryptates de terres rares ;
- l'élément optique intermédiaire est réalisé dans d'autres matériaux tels que le polycarbonate, le polymethyl(meth)acylate, le polyamide ou des polymères thiouréthanes, allyl-carbonates, acryliques, urétanes et/ou épisulfides, ces matériaux étant bien connu de l'homme de l'art dans le domaine des lentilles ophtalmiques ;
- l'élément optique intermédiaire peut comporter sur au moins une face un ou plusieurs traitements parmi un traitement antireflets, un traitement antisalissure, un traitement anti-rayure, un traitement antichocs, un filtre polarisé ;
- les traitements mentionnés ci-dessus peuvent par exemple être réalisés par transfert ou par lamination, autrement dit par collage, d'un film fonctionnel ;
- le support de fabrication additive présente une surface de fabrication sur laquelle l'élément optique intermédiaire est fabriqué de manière additive, laquelle surface de fabrication est au moins partiellement plane et/ou au moins partiellement sphérique ;
- le procédé comporte en outre une ou plusieurs autres étapes de fabrication, par exemple une étape de détourage et/ou une étape de marquage pour former des marques dites temporaires ;
- le procédé de fabrication additif comporte une étape supplémentaire d'irradiation thermique pour polymériser ou durcir toute la structure fabriquée de manière additive ;
- le procédé de fabrication comporte une étape où la prise en compte de la variation d'indice du matériau de l'élément optique intermédiaire peut se faire sous la forme d'une boucle d'optimisation itérative selon des procédures d'optimisation connues ;
- le matériau de l'élément optique intermédiaire comporte optionnellement un ou plusieurs colorants, et/ou des nanoparticules configurées pour modifier sa transmission optique et/ou son aspect, et/ou des nanoparticules ou additifs configurés pour modifier ses propriétés mécaniques ;
- la machine de fabrication additive n'est pas une machine d'impression tridimensionnelle mais plutôt une machine de stéréolithographie, (SLA pour « Stereolithography *Apparatus* » en anglais) ou une machine d'extrusion par fil thermoplastique, aussi appelée machine de dépôt à fil tendu (FDM pour « *Fused Deposition Modeling* » en anglais) ;
- au moins une unité de contrôle et de commande comporte un microcontrôleur à la place du microprocesseur ;
- l'interface de communication client-serveur comporte des dispositifs configurés pour transférer la consigne de fabrication de l'élément optique intermédiaire déterminée par un programme d'ordinateur, lequel comporte des instructions configurées pour mettre en oeuvre chacune des étapes du procédé de fabrication décrit ci-dessus lorsque ce programme d'ordinateur est exécuté dans au moins une unité de contrôle et de commande qui comporte des éléments systémiques configurés pour exécuter ledit programme d'ordinateur ;
- l'interface de communication permet la communication via d'autres moyens que le réseau internet, par exemple via un réseau intranet ou un réseau privé sécurisé ; et/ou
- l'interface de communication permet de transférer l'ensemble du programme d'ordinateur vers un système de traitement de données distant pour la mise en oeuvre du procédé de fabrication dans un autre système de fabrication pourvu d'une machine de fabrication additive et d'une machine de polissage souple et optionnellement dans une ou plusieurs autres machines de traitement.

## Revendications

1. Procédé de fabrication d'une lentille ophtalmique présentant au moins une fonction optique, **caractérisé en ce qu'**il comporte :
- une étape de fabriquer de manière additive (100) un élément optique intermédiaire (10) par le dépôt d'une pluralité d'éléments de volume prédéterminés d'au moins un matériau ayant un indice de réfraction prédéterminé, ledit élément optique intermédiaire comprenant une lentille ophtalmique cible (30) adjoint d'au moins une surépaisseur (9) constituée d'une partie de ladite pluralité d'éléments de volume ; et
- une étape de fabriquer par polissage souple (300) ladite lentille ophtalmique cible (30) à partir dudit élément optique intermédiaire (10), par la soustraction au moins partielle de ladite au moins une surépaisseur (9) de sorte à filtrer des aspérités (40) formées sur au moins une face (15, 16) dudit élément optique intermédiaire (10) durant ladite étape de fabrication additive ;
**caractérisé en ce que** ladite étape de fabrication additive (100) comporte une étape de déterminer une consigne de fabrication (113) dudit élément optique intermédiaire (10), dans laquelle ladite surépaisseur (9) est déterminée en fonction de paramètres prédéterminés que présente ladite étape de polissage souple (300), lesdits paramètres prédéterminés étant une caractéristique géométrique représentative d'une fréquence spatiale de coupure et une caractéristique géométrique représentative d'une capacité d'enlèvement de matière.

2. Procédé selon la revendication 1, **caractérisé en ce que** ladite étape de déterminer ladite consigne de fabrication (113) dudit élément optique intermédiaire (10) est configurée pour que, au moins dans une zone déterminée de la face (15, 16) de l'élément optique intermédiaire (10), lesdites aspérités (40) soient espacées les unes des autres d'une distance inférieure à une distance critique déterminée en fonction d'une valeur de ladite caractéristique géométrique représentative de la fréquence spatiale de coupure.

3. Procédé selon la revendication 2, **caractérisé en ce que** ladite caractéristique géométrique représentative de ladite fréquence spatiale de coupure correspond à un diamètre d'une pupille de polissage caractéristique de ladite étape de polissage souple (300) et la distance critique est inférieure ou égale à la moitié, préférentiellement au quart, ou encore au dixième, du diamètre de ladite pupille de polissage.

4. Procédé selon l'une quelconque des revendications 1 à 3, **caractérisé en ce que** ladite étape de déterminer ladite consigne de fabrication (113) dudit élément optique intermédiaire (10) est configurée pour que ledit élément optique intermédiaire (10) soit incliné par rapport à un axe prédéterminé de construction additive, dit axe de stratification, selon lequel ladite pluralité d'éléments de volume prédéterminés d'au moins un matériau est déposée.

5. Procédé selon l'une quelconque des revendications 1 à 4, **caractérisé en ce que** ladite étape de déterminer ladite consigne de fabrication (113) dudit élément optique intermédiaire (10) est configurée pour que ledit élément optique intermédiaire (10) présente, en section, au niveau de sa face (15, 16) au moins une zone de fabrication d'un premier type qui est pourvue d'au moins deux premières portions (50) et d'au moins une deuxième portion (51), formées en alternance, lesdites premières portions (50) étant chacune pourvues d'au moins un élément de volume prédéterminé dudit matériau et ladite au moins une deuxième portion (51) étant au moins partiellement dépourvue d'éléments de volume prédéterminés dudit matériau ; grâce à quoi des aspérités sont formées sur cette zone de fabrication du premier type.

6. Procédé selon la revendication 5, **caractérisé en ce que** ladite au moins une zone de fabrication du premier type est pourvue d'éléments de volume prédéterminés d'un matériau ou de plusieurs matériaux distincts.

7. Procédé selon l'une des revendications 5 et 6, **caractérisé en ce que** ladite au moins une zone de fabrication du premier type est définie par un cylindre glissant d'axe normal à la surface de la lentille ophtalmique cible (30), avec le volume total de la surépaisseur (9) dans ce cylindre glissant qui est sensiblement constant.

8. Procédé selon la revendication 7, **caractérisé en ce que** ledit cylindre glissant présente un diamètre similaire ou inférieur à celui d'une pupille de polissage caractéristique de ladite étape de polissage souple (300).

9. Procédé selon l'une quelconque des revendications 1 à 8, **caractérisé en ce que** ladite étape de déterminer ladite consigne de fabrication (113) dudit élément optique intermédiaire (10) est configurée pour que ledit élément optique intermédiaire (10) présente, en section, au niveau de sa face (15, 16) au moins une zone de fabrication d'un deuxième type, pourvue d'une pluralité d'éléments de volume prédéterminés d'un ou de plusieurs matériaux, avec lesdits éléments de volume prédéterminés qui présentent des propriétés d'abrasabilité distinctes.

10. Procédé selon l'une quelconque des revendications 5 à 9, **caractérisé en ce que** ladite étape de fabrication additive (100) est configurée pour former une pluralité de couches superposées de dits éléments de volume prédéterminés (18), et ledit élément optique intermédiaire (10) ainsi fabriqué présente au moins deux dites zones de fabrication du premier type et/ou du deuxième type, qui sont formées sur des couches distinctes.

11. Procédé selon l'une quelconque des revendications 5 à 10, **caractérisé en ce que** ladite étape de fabrication additive (100) est configurée pour former une pluralité de couches superposées de dits éléments de volume prédéterminés (18), et ledit élément optique intermédiaire (10) ainsi fabriqué présente au moins une dite zone de fabrication du premier type et/ou du deuxième type, qui est formée sur au moins deux couches immédiatement superposées.

12. Système de fabrication d'une lentille ophtalmique, comportant une machine de fabrication additive (1) pour fabriquer un élément optique intermédiaire (10) et une machine de polissage souple (21) pour fabriquer une lentille ophtalmique à partir dudit élément optique intermédiaire (10), et au moins une unité de contrôle et de commande (2, 22) pourvue d'éléments systémiques (3, 4, 5, 23, 24, 25) configurés pour exécuter un programme d'ordinateur comportant des instructions configurées pour mettre en oeuvre chacune des étapes du procédé selon l'une quelconque des revendications 1 à 11.

13. Système selon la revendication 12, **caractérisé en ce que** ladite machine de polissage souple (21) présente un polissoir et une cinématique d'actionnement dudit polissoir, qui est fonction dudit polissoir, lequel couple polissoir et cinématique d'actionnement confère à ladite machine de polissage souple (20) une pupille de polissage souple (33) donnée et une capacité d'enlèvement de matière donnée.

14. Système selon l'une des revendications 12 et 13, **caractérisé en ce que** ladite machine de fabrication additive est une machine d'impression tridimensionnelle, ou de stéréolithographie, ou de stéréolithographie par projection de masque, voire de de frittage ou de fusion sélective par laser, ou d'extrusion par fil thermoplastique.

15. Système de fabrication selon l'une quelconque des revendications 12 à 14, **caractérisé en ce que** ladite machine de fabrication additive (1) comporte un support de fabrication (12) qui est amovible et configuré pour servir de support de fabrication pour la machine de polissage souple (21).

## Patentansprüche

1. Verfahren zur Herstellung einer ophthalmischen Linse, die mindestens eine optische Funktion aufweist, **dadurch gekennzeichnet, dass** es umfasst:
- einen Schritt des additiven Herstellens (100) eines optischen Zwischenelements (10) durch Aufbringen einer Vielzahl von vorgegebenen Volumenelementen aus mindestens einem Material mit einem vorgegebenen Brechungsindex, wobei das optische Zwischenelement eine ophthalmische Ziellinse (30) umfasst, der mindestens eine Überdicke (9) hinzugefügt ist, die aus einem Teil der Vielzahl von Volumenelementen besteht; und
- einen Schritt des Herstellens durch flexibles Polieren (300) der ophthalmischen Ziellinse (30) aus dem optischen Zwischenelement (10) durch zumindest teilweise Subtraktion der mindestens einen Überdicke (9), so dass Unebenheiten (40) gefiltert werden, die auf mindestens einer Seite (15, 16) des optischen Zwischenelements (10) während des Schritts der additiven Herstellung gebildet werden;
**dadurch gekennzeichnet, dass** der Schritt des additiven Herstellens (100) eine Schritt des Bestimmens eines Herstellungssollwerts (113) des optischen Zwischenelements (10) umfasst, bei dem die Überdicke (9) in Abhängigkeit von vorgegebenen Parametern bestimmt wird, die der Schritt des flexiblen Polierens (300) aufweist, wobei die vorgegebenen Parameter ein geometrisches Merkmal, das für eine räumliche Grenzfrequenz repräsentativ ist, und ein geometrisches Merkmal, dass für eine Materialabtragleistung repräsentativ ist, sind.

2. Verfahren nach Anspruch 1, **dadurch gekennzeichnet, dass** der Schritt des Bestimmens des Herstellungssollwerts (113) des optischen Zwischenelements (10) so ausgestaltet ist, dass mindestens in einem bestimmten Bereich der Seite (15, 16) des optischen Zwischenelements (10) die Unebenheiten (40) voneinander um einen Abstand beabstandet sind, der geringer ist als ein kritischer Abstand, der in Abhängigkeit von einem Wert des geometrischen Merkmals, das für die räumliche Grenzfrequenz repräsentativ ist, bestimmt wird.

3. Verfahren nach Anspruch 2, **dadurch gekennzeichnet, dass** das geometrische Merkmal, das für die räumliche Grenzfrequenz repräsentativ ist, einem Durchmesser einer Polierpupille entspricht, der für den Schritt des flexiblen Polierens (300) charakteristisch ist, und der kritische Abstand höchstens die Hälfte, bevorzugt höchstens ein Viertel, oder auch höchstens ein Zehntel, des Durchmessers der Polierpupille beträgt.

4. Verfahren nach einem der Ansprüche 1 bis 3, **dadurch gekennzeichnet, dass** der Schritt des Bestimmens des Herstellungssollwerts (113) des optischen Zwischenelements (10) so ausgestaltet ist, dass das optische Zwischenelement (10) in Bezug auf eine vorgegebene Achse des additiven Aufbaus, Schichtungsachse genannt, geneigt ist, gemäß der die Vielzahl von vorgegebenen Volumenelementen aus mindestens einem Material aufgebracht wird.

5. Verfahren nach einem der Ansprüche 1 bis 4, **dadurch gekennzeichnet, dass** der Schritt des Bestimmens des Herstellungssollwerts (113) des optischen Zwischenelements (10) so ausgestaltet ist, dass das optische Zwischenelement (10) im Querschnitt auf Höhe seiner Seite (15, 16) mindestens eine Herstellungszone eines ersten Typs aufweist, die mit mindestens zwei ersten Abschnitten (50) und mindestens einem zweiten Abschnitt (51), die abwechselnd gebildet sind, versehen ist, wobei die ersten Abschnitte (50) jeweils mit mindestens einem vorgegebenen Volumenelement aus dem Material versehen sind und der mindestens eine zweite Abschnitt (51) zumindest teilweise nicht mit vorgegebenen Volumenelementen aus dem Material versehen ist, dank dessen Unebenheiten auf dieser Herstellungszone des ersten Typs gebildet werden.

6. Verfahren nach Anspruch 5, **dadurch gekennzeichnet, dass** mindestens eine Herstellungszone des ersten Typs mit vorgegebenen Volumenelementen aus einem Material oder aus mehreren verschiedenen Materialien versehen ist.

7. Verfahren nach einem der Ansprüche 5 und 6, **dadurch gekennzeichnet, dass** die mindestens eine Herstellungszone des ersten Typs durch einen gleitenden Zylinder mit einer Achse senkrecht zur Oberfläche der ophthalmischen Ziellinse (30) definiert wird, wobei das Gesamtvolumen der Überdicke (9) in diesem gleitenden Zylinder im Wesentlichen konstant ist.

8. Verfahren nach Anspruch 7, **dadurch gekennzeichnet, dass** der gleitende Zylinder einen ähnlichen oder kleineren Durchmesser als der einer Polierpupille aufweist, der für den Schritt des flexiblen Polierens (300) charakteristisch ist.

9. Verfahren nach einem der Ansprüche 1 bis 8, **dadurch gekennzeichnet, dass** der Schritt des Bestimmens des Herstellungssollwerts (113) des optischen Zwischenelements (10) so ausgestaltet ist, dass das optische Zwischenelement (10) im Querschnitt auf Höhe seiner Seite (15, 16) mindestens eine Herstellungszone eines zweiten Typs aufweist, die mit einer Vielzahl von vorgegebenen Volumenelementen aus einem oder mehreren Materialien versehen ist, wobei die vorgegebenen Volumenelemente unterschiedliche Abrasivitätseigenschaften aufweisen.

10. Verfahren nach einem der Ansprüche 5 bis 9, **dadurch gekennzeichnet, dass** der Schritt des additiven Herstellens (100) so ausgestaltet ist, dass eine Vielzahl von übereinanderliegenden Schichten aus den vorgegebenen Volumenelementen (18) gebildet wird und das so hergestellte optische Zwischenelement (10) mindestens zwei Herstellungszonen des ersten Typs und/oder des zweiten Typs aufweist, die auf verschiedenen Schichten gebildet sind.

11. Verfahren nach einem der Ansprüche 5 bis 10, **dadurch gekennzeichnet, dass** der Schritt des additiven Herstellens (100) so ausgestaltet ist, dass eine Vielzahl von übereinanderliegenden Schichten aus den vorgegebenen Volumenelementen (18) gebildet wird und das so hergestellte optische Zwischenelement (10) mindestens eine Herstellungszone des ersten Typs und/oder des zweiten Typs aufweist, die auf mindestens zwei unmittelbar übereinanderliegenden Schichten gebildet ist.

12. System zur Herstellung einer ophthalmischen Linse mit einer Maschine zur additiven Herstellung (1) zum Herstellen eines optischen Zwischenelements (10) und einer Maschine zum flexiblen Polieren (21), um eine ophthalmische Linse aus dem optischen Zwischenelement (10) herzustellen, und mindestens einer Steuerungs- und Regelungseinheit (2, 22), die mit systemischen Elementen (3, 4, 5, 23, 24, 25) versehen ist, die so ausgestaltet sind, dass sie ein Computerprogramm ausführen, das Anweisungen enthält, die so ausgestaltet sind, dass jeder der Schritte des Verfahrens nach einem der Ansprüche 1 bis 11 ausgeführt wird.

13. System nach Anspruch 12, **dadurch gekennzeichnet, dass** die Maschine zum flexiblen Polieren (21) ein Polierwerkzeug und eine Kinematik zur Betätigung des Polierwerkzeugs aufweist, die von dem Polierwerkzeug abhängig ist, wobei die Kombination aus Polierwerkzeug und Betätigungskinematik der Maschine zum flexiblen Polieren (20) eine gegebene Pupille zum flexiblen Polieren (33) und eine gegebene Materialabtragleistung verleiht.

14. System nach einem der Ansprüche 12 und 13, **dadurch gekennzeichnet, dass** die Maschine zur additiven Herstellung eine Maschine zum dreidimensionalen Drucken oder zur Stereolithographie oder zur Stereolithographie mit Maskenprojektion oder zum Sintern oder selektiven Schmelzen durch Laser oder zur Extrusion aus thermoplastischem Faden ist.

15. Herstellungssystem nach einem der Ansprüche 12 bis 14, **dadurch gekennzeichnet, dass** die Maschine zur additiven Herstellung (1) einen Herstellungsträger (12) umfasst, der abnehmbar ist und dazu ausgestaltet ist, als Herstellungsträger für die Maschine zum flexiblen Polieren (21) zu dienen.

## Claims

1. Process for manufacturing an ophthalmic lens having at least one optical function, **characterized in that** it comprises:
- a step of additively manufacturing (100) an intermediate optical element (10) by depositing a plurality of predetermined volume elements of at least one material having a predetermined refractive index, said intermediate optical element comprising a target ophthalmic lens (30) adjoined to at least one extra amount of material, called an extra thickness, (9) consisting of a portion of said plurality of volume elements; and
- a step of manufacturing by soft polishing (300) said target ophthalmic lens (30) from said intermediate optical element (10), by at least partial subtraction of said at least one extra thickness (9) so as to filter asperities (40) formed on at least one face (15, 16) of said intermediate optical element (10) during said additive manufacturing step,
**characterized in that** said additive manufacturing step (100) comprises a step of determining manufacturing settings (113) of said intermediate optical element (10), in which step said extra thickness (9) is determined depending on predetermined parameters of said soft polishing step (300), said predetermined parameters being a geometric characteristic representative of a cut-off spatial frequency and a geometric characteristic representative of a material removal capacity.

2. Process according to Claim 1, **characterized in that** said step of determining said manufacturing settings (113) of said intermediate optical element (10) is configured so that, at least in a determined zone of the face (15, 16) of the intermediate optical element (10), said asperities (40) are spaced apart from one another by a distance smaller than a critical distance determined depending on a value of said geometric characteristic representative of the cut-off spatial frequency.

3. Process according to Claim 2, **characterized in that** said geometric characteristic representative of said cut-off spatial frequency corresponds to a diameter of a characteristic polishing pupil of said soft polishing step (300) and the critical distance is smaller than or equal to half, preferably one quarter of, or even one tenth of, the diameter of said polishing pupil.

4. Process according to any one of Claims 1 to 3, **characterized in that** said step of determining said manufacturing settings (113) of said intermediate optical element (10) is configured so that said intermediate optical element (10) is inclined relative to a predetermined additive construction axis, referred to as the stratification axis, along which said plurality of predetermined volume elements of at least one material is deposited.

5. Process according to any one of Claims 1 to 4, **characterized in that** said step of determining said manufacturing settings (113) of said intermediate optical element (10) is configured so that said intermediate optical element (10) has, in cross section, on its face (15, 16) at least one manufacturing zone of a first type that is provided with at least two first segments (50) and at least one second segment (51), which segments are formed in alternation, said first segments (50) each being provided with at least one predetermined volume element of said material and said at least one second portion (51) being at least partially devoid of predetermined volume elements of said material; by virtue of which asperities are formed in this manufacturing zone of the first type.

6. Process according to Claim 5, **characterized in that** said at least one manufacturing zone of the first type is provided with predetermined volume elements of a material or of a plurality of distinct materials.

7. Process according to one of Claims 5 and 6, **characterized in that** said at least one manufacturing zone of the first type is defined by a sliding cylinder of axis normal to the surface of the target ophthalmic lens (30), the total volume of the extra thickness (9) in this sliding cylinder remaining substantially constant.

8. Process according to Claim 7, **characterized in that** said sliding cylinder has a diameter similar to or smaller than that of a characteristic polishing pupil of said soft polishing step (300).

9. Process according to any one of Claims 1 to 8, **characterized in that** said step of determining said manufacturing settings (113) of said intermediate optical element (10) is configured so that said intermediate optical element (10) has, in cross-section, on its face (15, 16) at least one manufacturing zone of a second type, provided with a plurality of predetermined volume elements of one or more materials, said predetermined volume elements having distinct abradability properties.

10. Process according to any one of Claims 5 to 9, **characterized in that** said additive manufacturing step (100) is configured to form a plurality of superposed layers of said predetermined volume elements (18), and said intermediate optical element (10) thus manufactured has at least two said manufacturing zones of the first type and/or of the second type, which zones are formed in distinct layers.

11. Process according to any one of Claims 5 to 10, **characterized in that** said additive manufacturing step (100) is configured to form a plurality of superposed layers of said predetermined volume elements (18), and said intermediate optical element (10) thus manufactured has at least one said manufacturing zone of the first type and/or of the second type, which zone is formed in at least two immediately superposed layers.

12. System for manufacturing an ophthalmic lens, including an additive manufacturing machine (1) for manufacturing an intermediate optical element (10), and a soft polishing machine (21) for manufacturing an ophthalmic lens from said intermediate optical element (10), and at least one command-control unit (2, 22) provided with system elements (3, 4, 5, 23, 24, 25) configured to run a computer program including instructions configured to implement each of the steps of the process according to any one of Claims 1 to 11.

13. System according to Claim 12, **characterized in that** said soft polishing machine (21) has a polisher and an actuating kinematic of said polisher, which is dependent on said polisher, which polisher and actuating kinematic pair confer on said soft polishing machine (20) a given soft polishing pupil (33) and a given material removal capacity.

14. System according to one of Claims 12 and 13, **characterized in that** said additive manufacturing machine is a three-dimensional printing, or stereolithography, or mask projection stereolithography machine or even a selective laser melting or sintering machine, or a thermoplastic filament extrusion machine.

15. Manufacturing system according to any one of Claims 12 to 14, **characterized in that** said additive manufacturing machine (1) includes a manufacturing holder (12) that is removable and configured to serve as a manufacturing holder for the soft polishing machine (21) .
